# EUROPEAN PATENT APPLICATION

(11) **EP 4 583 268 A1**
(43) Date of publication of application: **09.07.2025**
(21) Application number: 23860089.4
(22) Date of filing: 18.08.2023
(51) Int. Cl.: H01M 50/202, H01M 10/0562, H01M 10/058, H01M 10/0585, H01M 50/216, H01M 50/244, H01M 50/262, H01M 50/271, H01M 50/296, H01M 50/50, H01M 50/55

(54) **BATTERY PACKAGE, AND BATTERY MODULE**

(30) Priority: 31.08.2022 JP 2022137684
(71) Applicant: Kyocera Corporation, Kyoto-shi, Kyoto 612-8501 (JP)
(72) Inventor: NAKAMOTO, Koutarou, Kyoto-shi, Kyoto 612-8501 (JP); IKENO, Ryota, Kyoto-shi, Kyoto 612-8501 (JP)
(74) Representative: Viering, Jentschura & Partner mbB Patent- und Rechtsanwälte
(86) International application number: PCT/JP2023/029840
(87) International publication number: WO 2024/048326

(57) **Abstract**

To realize easy checking of a connection state. A receiving portion is located on a frame portion or an insulation substrate, and a conductive metal plate is located on an opening side of a recessed portion. The conductive metal plate includes a connecting portion configured to electrically connect to a second electrode from above and a locking portion configured to lock to the receiving portion. A lid is electrically insulated from the conductive metal plate.

## Description

### TECHNICAL FIELD

The present disclosure relates to a battery package and a battery module.

### BACKGROUND OF INVENTION

Patent Document 1 discloses a battery module that can be surface-mounted on a circuit board as a power supply or an auxiliary power supply for a small electronic device. A battery module according to the related art (referred to as an electrochemical battery in Patent Document 1) includes an insulation substrate (referred to as a base member in Patent Document 1) having a recessed portion for accommodating a battery (referred to as an electrochemical element in Patent Document 1), and a frame portion (referred to as a seal ring in Patent Document 1) located on the upper surface of the insulation substrate. The insulation substrate has an annular projecting portion (referred to as a locking portion in Patent Document 1) projecting toward the inside of the recessed portion on the opening side of the recessed portion.

A first electrode (referred to as a first current collector in Patent Document 1) is located at the bottom of the recessed portion of the insulation substrate. A second electrode (referred to as a metal layer in Patent Document 1) is located from the lower surface of the projecting portion of the insulation substrate to the upper surface of the insulation substrate. A first external electrode (referred to as one external connection terminal in Patent Document 1) electrically connected to the first electrode and a second external electrode (referred to as the other external connection terminal in Patent Document 1) electrically connected to the second electrode are located on the lower surface of the insulation substrate.

A battery package includes a conductive metal plate (referred to as a diaphragm-shaped spring in Patent Document 1) located on the opening side of the recessed portion of the insulation substrate, and the conductive metal plate presses the battery to the bottom surface side of the recessed portion of the insulation substrate by an elastic force. A plurality of locations on the peripheral portion of the conductive metal plate are electrically connected to the second electrode while being locked from below with the projecting portion of the insulation substrate.

The battery package includes a lid (referred to as a sealing plate in Patent Document 1) that covers a frame portion. A current collector is located on the lower surface of the lid, and the lid is electrically connected to the second electrode via the current collector and the frame portion.

### CITATION LIST

### PATENT LITERATURE

Patent Document 1: JP 2012-69508 A

### SUMMARY

A battery package according to the present disclosure includes an insulation substrate having a first surface, a second surface on an opposite side to the first surface, and a recessed portion open to the first surface and configured to accommodate a battery, a frame portion surrounding the recessed portion on the first surface, a first external electrode located on the second surface, a second external electrode located on the second surface, a first electrode located on a bottom surface of the recessed portion and electrically connected to the first external electrode, a second electrode located on the surface of the insulation substrate between the recessed portion and the frame portion in a plan view of the first surface, and electrically connected to the second external electrode, a receiving portion located at the frame portion or the insulation substrate, a conductive metal plate located on an opening side of the recessed portion, including a connecting portion configured to electrically connect to the second electrode from above, and a locking portion configured to lock to the receiving portion, the conductive metal plate pressing the battery to the bottom surface side of the recessed portion by an elastic force, and a lid electrically insulated from the conductive metal plate and configured to close the frame portion.

A battery module according to the present disclosure includes a battery package according to the present disclosure, and a battery accommodated in the recessed portion of the battery package and including a lower surface electrode electrically connected to the first electrode and an upper surface electrode electrically connected to the conductive metal plate.

### BRIEF DESCRIPTION OF THE DRAWINGS

FIG. 1 is a schematic plan view illustrating a battery package and a battery module according to a first embodiment.
FIG. 2 is a schematic bottom view of the battery package illustrated in FIG. 1.
FIG. 3 is a schematic cross-sectional view taken along line III-III in FIG. 1.
FIG. 4 is a schematic cross-sectional view taken along line IV-IV in FIG. 1.
FIG. 5 is a schematic plan view illustrating a battery package and a battery module according to another aspect of the first embodiment.
FIG. 6 is a schematic cross-sectional view taken along line VI-VI in FIG. 5.
FIG. 7 is a schematic cross-sectional view taken along line VII-VII in FIG. 5.
FIG. 8 is a schematic plan view illustrating the battery package according to another aspect of the first embodiment.
FIG. 9 is a schematic cross-sectional view illustrating the battery package according to another aspect of the first embodiment.
FIG. 10 is a schematic cross-sectional view illustrating the battery package according to another aspect of the first embodiment.
FIG. 11 is a schematic plan view illustrating the battery package and the battery module according to a second embodiment.
FIG. 12 is a schematic perspective view of the battery package illustrated in FIG. 11.
FIG. 13 is a schematic perspective view of the battery package illustrated in FIG. 11.
FIG. 14 is a schematic cross-sectional view taken along line XIV-XIV in FIG. 11.
FIG. 15 is a schematic cross-sectional view taken along line XV-XV in FIG. 11.
FIG. 16 is a schematic cross-sectional view illustrating a battery package according to another aspect of the second embodiment.
FIG. 17 is a schematic cross-sectional view illustrating a battery package according to another aspect of the second embodiment.
FIG. 18 is a schematic plan view illustrating a battery package according to a first variation of the second embodiment.
FIG. 19 is a schematic plan view illustrating a state in which a locking piece is inserted into an insertion port.
FIG. 20 is a schematic cross-sectional view taken along line XX-XX in FIG. 18.
FIG. 21 is a schematic plan view illustrating a battery package and a battery module according to a second variation of the second embodiment.
FIG. 22 is a schematic cross-sectional view taken along line XXII-XXII in FIG. 21.
FIG. 23 is a schematic plan view illustrating a battery package and a battery module according to a third embodiment.
FIG. 24 is a schematic cross-sectional view taken along line XXIV-XXIV in FIG. 23.
FIG. 25 is a schematic cross-sectional view taken along line XXV-XXV in FIG. 23.
FIG. 26 is a schematic cross-sectional view illustrating a battery package according to another aspect of the third embodiment.
FIG. 27 is a schematic plan view illustrating a battery package and a battery module according to a fourth embodiment.
FIG. 28 is a schematic cross-sectional view taken along line XXVIII-XXVIII in FIG. 27.
FIG. 29 is a schematic cross-sectional view taken along line XXIX-XXIX in FIG. 27.
FIG. 30 is a schematic plan cross-sectional view illustrating a battery package and a battery module according to a fifth embodiment.
FIG. 31 is a schematic cross-sectional view taken along line XXXI-XXXI in FIG. 30.
FIG. 32 is a schematic cross-sectional view taken along line XXXII-XXXII in FIG. 30.
FIG. 33 is a schematic plan view illustrating a battery package according to a variation of the fifth embodiment.
FIG. 34 is a schematic plan view illustrating a state before the locking piece is inserted into a clasp.
FIG. 35 is a schematic cross-sectional view taken along line XXXV-XXXV in FIG. 33.

### DESCRIPTION OF EMBODIMENTS

For example, in the battery module described in Patent Document 1, the conductive metal plate is electrically connected to the second electrode while being locked at a plurality of portions on the peripheral portion of the conductive metal plate with projecting portions of the insulation substrate from below. Therefore, in the manufacturing stage of the battery module, the connection state between the conductive metal plate and the second electrode cannot be checked by visual inspection. Therefore, determination on whether the battery module is a non-defective product or a defective product cannot be performed by visual inspection, causing a concern that a defective product may be unexpectedly released on the market.

Since the lid is electrically connected to the second electrode, the upper surface electrode of the battery accommodated in the recessed portion of the insulation substrate and the lid are electrically connected to each other. Therefore, there is a concern about leakage of electric power from the lid and short-circuiting due to contact between the lid and other components.

In one aspect of the present disclosure, easy checking of a connection state in visual inspection of the battery module is realized.

In the battery module according to the present disclosure, determination of whether the battery module is a non-defective product or a defective product can be easily performed by visual inspection, thus eliminating the risk of unexpectedly producing a defective product. The risk of short-circuiting between the lid and other components is reduced, while efficiently extracting electric power from the battery.

According to the present disclosure, the connection state can be easily checked in the visual inspection of the battery module.

Hereinafter, the battery package and the battery module according to embodiments will be described in detail with reference to the accompanying drawings. However, each of the drawings, which will be referred to below, is a simplified representation of only components necessary for description of the embodiment, for convenience of description. Therefore, the battery package and the battery module according to the embodiment may include arbitrary constituent elements that are not illustrated in the drawings to be referred to. The dimensions of the components in the drawings may not faithfully represent the actual dimensions of the components, the dimension ratios of the members, or the like. The rectangular shape is not limited to a strictly rectangular shape, and includes a shape that can be visually recognized as a rectangular shape as a whole even when, for example, a corner portion is curved.

### First Embodiment

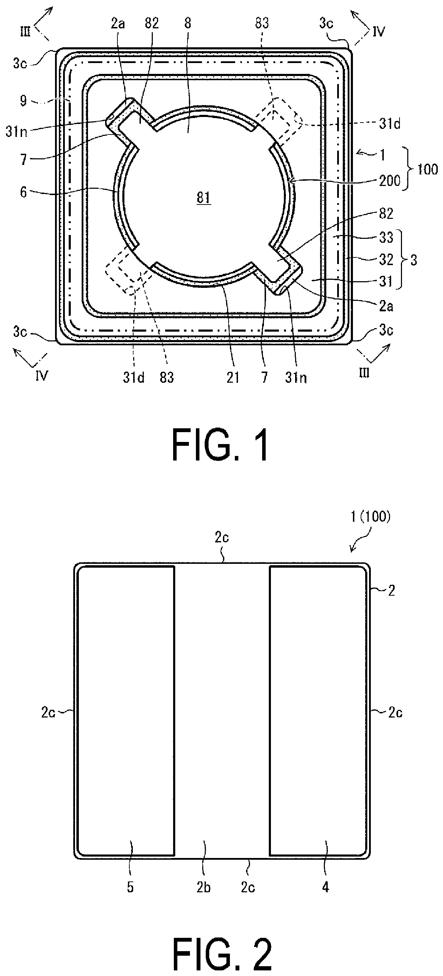

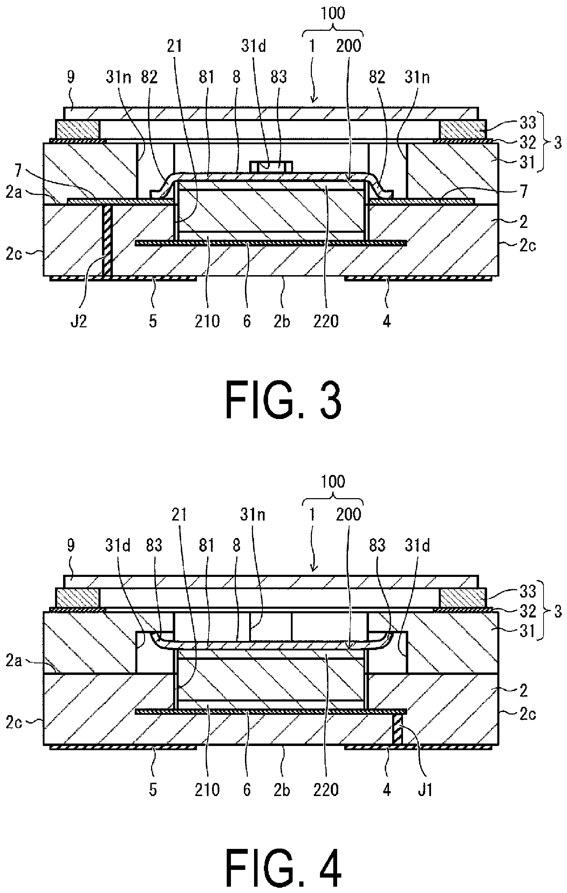

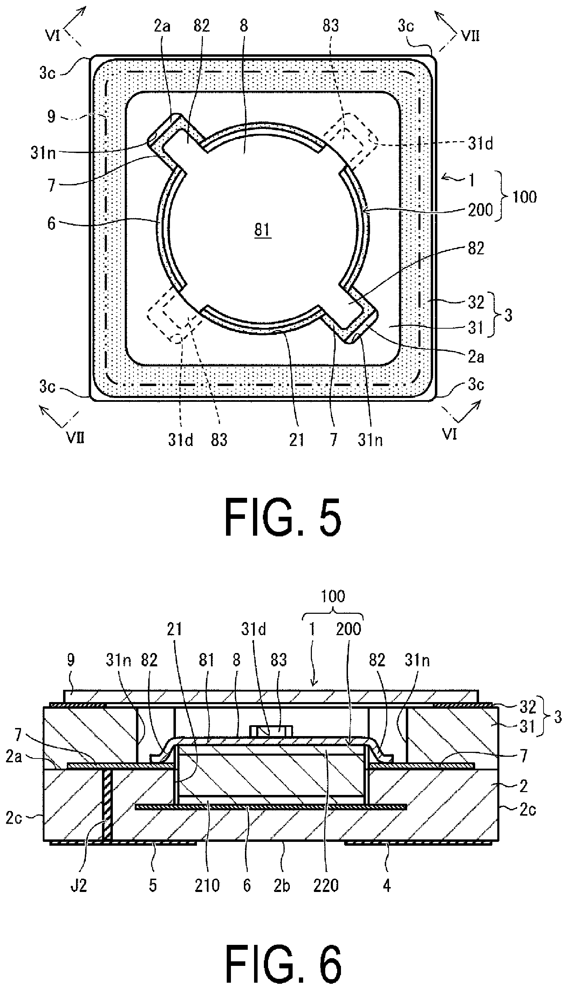

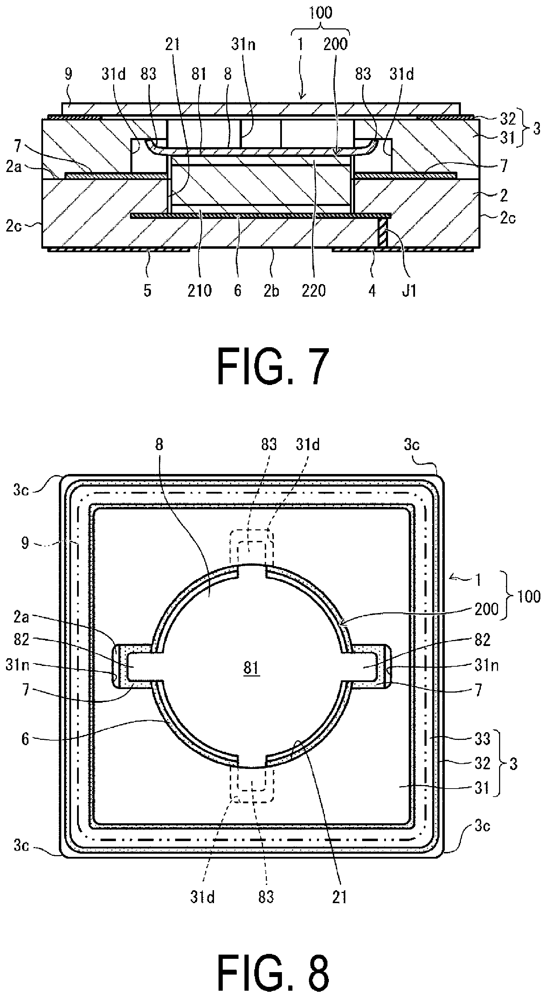

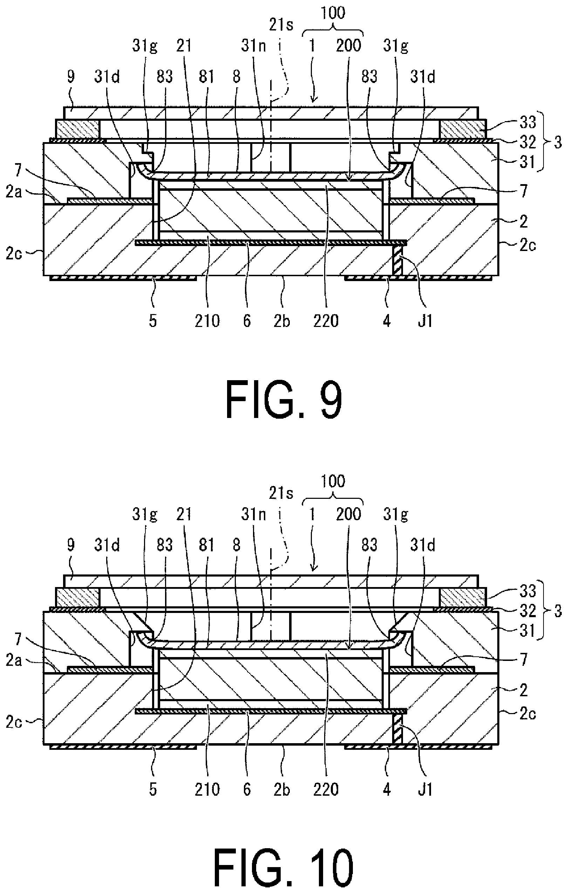

A battery package 1 and a battery module 100 according to a first embodiment will be described with reference to FIGs. 1 to 10. FIG. 1 is a schematic plan view illustrating the battery package 1 and the battery module 100 according to the first embodiment. FIG. 2 is a schematic bottom view of the battery package 1 illustrated in FIG. 1. FIG. 3 is a schematic cross-sectional view taken along line III-III in FIG. 1. FIG. 4 is a schematic cross-sectional view taken along line IV-IV in FIG. 1. FIG. 5 is a schematic plan view illustrating the battery package 1 and the battery module 100 according to another aspect of the first embodiment. FIG. 6 is a schematic cross-sectional view taken along line VI-VI in FIG. 5. FIG. 7 is a schematic cross-sectional view taken along line VII-VII in FIG. 5. FIG. 8 is a schematic plan view illustrating the battery package 1 according to another aspect of the first embodiment. FIGs. 9 and 10 are schematic cross-sectional views each illustrating the battery package according to another aspect of the first embodiment.

As illustrated in the examples in FIGs. 1 to 7, the battery module 100 according to the first embodiment includes the battery package 1 according to the first embodiment and a battery 200 mounted on the battery package 1. The battery package 1 may include an insulation substrate 2, and the shape of the insulation substrate 2 in a plan view may be, for example, a rectangular shape. The insulation substrate 2 is made of, for example, a ceramic such as an aluminum oxide sintered body (alumina ceramic), an aluminum nitride sintered body, a mullite sintered body, or a glass ceramic sintered body. The insulation substrate 2 may include a plurality of insulating layers or a single insulating layer. The shape of the insulation substrate 2 in a plan view is not limited to a rectangular shape, and can be changed as appropriate.

As in the example illustrated in FIGs. 1 and 3 to 7, the insulation substrate 2 may have a first surface 2a, a second surface 2b located on the opposite side to the first surface 2a, and a plurality of side surfaces 2c located between the first surface 2a and the second surface 2b. The first surface 2a of the insulation substrate 2 may be a flat surface or may have irregularities. The second surface 2b of the insulation substrate 2 may be a flat surface or may have irregularities. The insulation substrate 2 may have a recessed portion 21 for accommodating the battery 200, and the recessed portion 21 may be open to the first surface 2a. The shape of the recessed portion 21 of the insulation substrate 2 in a plan view may be, for example, a circular shape. An inner side surface of the recessed portion 21 of the insulation substrate 2 may be parallel to the thickness direction of the insulation substrate 2. The size of the recessed portion 21 of the insulation substrate 2 in a plan view may be slightly larger than the size of a battery 200 in a plan view. The depth of the recessed portion 21 of the insulation substrate 2 may be substantially the same as the thickness of the battery 200. The shape of the recessed portion 21 of the insulation substrate 2 in a plan view is not limited to a circular shape, and may be changed according to the shape of the battery 200 in a plan view.

As in the example illustrated in FIGs. 1 and 3 to 7, the battery package 1 may include a frame portion 3 surrounding the recessed portion 21 on the first surface 2a of the insulation substrate 2. The frame portion 3 may include an insulating frame body 31 located surrounding the recessed portion 21 on the first surface 2a of the insulation substrate 2. The insulating frame body 31 is made of a ceramic and may be integrated with the insulation substrate 2. The insulating frame body 31 may include a plurality of insulating layers or a single insulating layer. The contour shape of the insulating frame body 31 in a plan view may be a rectangular shape. The shape of the inner side surface of the insulating frame body 31 in a plan view may be a circular shape. The size of the inner side surface of the insulating frame body 31 in a plan view may be slightly larger than the size of the recessed portion 21 of the insulation substrate 2 in a plan view. The shape of the inner side surface of the insulating frame body 31 in a plan view is not limited to the rectangular shape, and may be changed according to the shape of the recessed portion 21 of the insulation substrate 2 in a plan view, the shape or arrangement of a second electrode 7 which will be described later, and the shape or arrangement of recessed step portions 31d which will be described later.

As in the examples illustrated in FIGs. 1 and 3 to 7, the insulating frame body 31 may have a plurality of recessed step portions 31d as receiving portions, and the plurality of recessed step portions 31d may be located on the inner side surface of the insulating frame body 31. The plurality of recessed step portions 31d of the insulating frame body 31 may be arranged rotationally symmetrically with respect to the center of the insulating frame body 31. In the first embodiment, the number of the recessed step portions 31d serving as receiving portions is two, but may be three or more. Instead of the plurality of recessed step portions 31d as receiving portions, an annular recessed step portion (not illustrated) may be located on the inner side surface of the insulating frame body 31.

As in the example illustrated in FIGs. 1 and 3 to 7, the frame portion 3 may include a frame-shaped metal film 32 located on the upper surface of the insulating frame body 31 so as to surround the opening side of the insulating frame body 31. The frame-shaped metal film 32 may be bonded to the upper surface of the insulating frame body 31. The frame-shaped metal film 32 is made of metallized metal powder containing tungsten (W), molybdenum (Mo), manganese (Mn), silver (Ag), copper (Cu), or the like as a component.

As in the example illustrated in FIGs. 1, 3, and 4, the frame portion 3 may include a metal frame body 33 located on the frame-shaped metal film 32 so as to surround the opening side of the insulating frame body 31. The metal frame body 33 may be bonded to the frame-shaped metal film 32 with a brazing material. The shape of the metal frame body 33 in a plan view may be a rectangular frame shape. As a constituent material of the metal frame body 33, a material having a small difference in thermal expansion compared with a ceramic, such as an iron-nickel (Fe-Ni) alloy or an iron-nickel-cobalt (Fe-Ni-Co) alloy may be used.

As in the example illustrated in FIGs. 5 to 7, in the battery package 1, the metal frame body 33 may be omitted from the configuration of the frame portion 3. In this case, the thickness of the battery package 1 and the battery module 100 can be reduced.

As in the example illustrated in FIGs. 2 to 4, 6, and 7, the battery package 1 may include a first external electrode 4 located on the second surface 2b of the insulation substrate 2. The first external electrode 4 may be located on one end portion side of the second surface 2b of the insulation substrate 2. The first external electrode 4 may be printed on the second surface 2b of the insulation substrate 2 and baked by firing. The first external electrode 4 may extend from the second surface 2b to the side surface 2c (including corners between a plurality of side surfaces 2c) of the insulation substrate 2. The first external electrode 4 may be electrically connectible to a first electrode of the mounting substrate via solder. The first external electrode 4 is made of the same metalized metal powder as the frame-shaped metal film 32.

As in the example illustrated in FIGs. 2 to 4, 6, and 7, the battery package 1 may include a second external electrode 5 located on the second surface 2b of the insulation substrate 2. The second external electrode 5 may be located on the other end portion side of the second surface 2b of the insulation substrate 2. The second external electrode 5 may be printed on the second surface 2b of the insulation substrate 2 and baked by firing. The second external electrode 5 may extend from the second surface 2b to the side surface 2c of the insulation substrate 2. The second external electrode 5 may be electrically connectable to a second electrode of the mounting substrate via solder. The second external electrode 5 is made of the same metalized metal powder as the frame-shaped metal film 32 and the like.

As in the example illustrated in FIGs. 3, 4, 6, and 7, the battery package 1 may include a first electrode 6 located on the bottom surface of the recessed portion 21 of the insulation substrate 2. The first electrode 6 may be printed on the bottom surface of the recessed portion 21 of the insulation substrate 2 and baked by firing. The first electrode 6 can be electrically connected to a lower surface electrode 201 of the battery 200 accommodated in the recessed portion 21 of the insulation substrate 2. The first electrode 6 may extend from the bottom surface of the recessed portion 21 of the insulation substrate 2 to the inside of the insulation substrate 2. The first electrode 6 may cover the entire bottom surface of the recessed portion 21 of the insulation substrate 2.

The first electrode 6 is electrically connected to the first external electrode 4 via a first connection wiring J1. The first connection wiring J1 may include a through-hole conductor penetrating one or a plurality of insulating layers and one or a plurality of wiring layers located between the insulating layers. The first electrode 6 and the first connection wiring J1 are made of the same metallized metal powder as the frame-shaped metal film 32 and the like.

When the first electrode 6 extends to the inside of the insulation substrate 2, a superior strength is achieved as the first connection wiring J1 is located at a thick portion of the insulation substrate 2. The first electrode 6 may not extend to the inside of the insulation substrate 2. In this case, the first connection wiring J1 penetrates from the bottom surface of the recessed portion 21 of the insulation substrate 2 to the second surface 2b, forming a short and low resistance path from the battery 200 to the first external electrodes 4, whereby the extract efficiency of the electric power from the battery 200 can be increased. In a top view, the first electrode 6 and the first external electrode 4 may overlap each other, and when the first connection wiring J1 is located in the overlapping portion, the first connection wiring J1 has a low resistance.

As in the examples illustrated in FIGs. 1 and 3 to 7, the battery package 1 may include the second electrode 7 located between the recessed portion 21 on the first surface 2a of the insulation substrate 2 and the insulating frame body 31 (frame portion 3). In a plan view of the first surface 2a of the insulation substrate 2, the second electrode 7 may be located between the recessed portion 21 on a surface including the first surface 2a of the insulation substrate 2 and the frame portion 3. The second electrode 7 may be printed between the recessed portion 21 and the insulating frame body 31 on the first surface 2a of the insulation substrate 2 and baked by firing. The second electrode 7 may extend between the insulation substrate 2 and the insulating frame body 31. The second electrode 7 can be electrically connected to an upper surface electrode 202 of the battery 200 accommodated in the recessed portion 21 of the insulation substrate 2. The second electrode 7 may be located at a plurality of positions in the circumferential direction of the recessed portion 21 on the first surface 2a of the insulation substrate 2. For example, as illustrated in FIGs. 1, 3, and 4, two second electrodes 7 may be located diagonally on the rectangular insulation substrate 2. In this case, the plurality of second electrodes 7 may be electrically connected by internal wiring (not illustrated). Alternatively, as illustrated in FIGs. 5 to 7, the second electrode 7 may have an annular shape so as to surround the opening side of the recessed portion 21 of the insulation substrate 2.

The second electrode 7 is electrically connected to the second external electrode 5 by second connection wiring J2. The second connection wiring J2 may include a through-hole conductor penetrating one or a plurality of insulating layers and one or a plurality of wiring layers located between the insulating layers. The second electrode 7 and the second connection wiring J2 are made of the same metallized metal powder as the frame-shaped metal film 32 and the like.

When the second electrode 7 extends between the insulation substrate 2 and the insulating frame body 31, a superior strength is achieved as the second connection wiring J2 is located at a thick portion of the insulation substrate 2. The second electrode 7 may not extend between the insulation substrate 2 and the insulating frame body 31. In this case, the second connection wiring J2 penetrates from the periphery of the recessed portion 21 of the first surface 2a to the second surface 2b of the insulation substrate 2, thus forming a short and low-resistance path from the battery 200 to the second external electrode 5, whereby the extraction efficiency of the electric power from the battery 200 can be increased. In a top view, the second electrode 7 and the second external electrode 5 may overlap each other, and when the second connection wiring J2 is located in the overlapping portion, the second connection wiring J2 has a low resistance.

As in the example illustrated in FIGs. 3, 4, 6, and 7, when the insulation substrate 2 and the insulating frame body 31 are made of, for example, an aluminum oxide-based sintered body, the insulation substrate 2 and the insulating frame body 31 are produced in the following manner. An appropriate organic binder, a solvent, and the like are added to and mixed with a raw material powder of aluminum oxide, silicon oxide or the like to produce a slurry. A ceramic green sheet for an insulating layer is produced by forming the slurry into a sheet shape by a doctor blade method, a calendar roll method, or the like. The ceramic green sheet for the insulating layer is subjected to appropriate punching processing for forming the recessed portion 21, holes with the recessed step portions 31d, or the like. Subsequently, a plurality of ceramic green sheets for the insulating layer are layered to produce a laminate. The laminate is, then, fired at a high temperature (from about 1300°C to 1600°C), whereby the insulation substrate 2 and the insulating frame body 31 are produced.

When the frame-shaped metal film 32, the first external electrode 4, the second external electrode 5, the first electrode 6, the first connection wiring J1, the second electrode 7, and the second connection wiring J2 are made as, for example, metallized layers of tungsten, they can be formed in the following manner. The frame-shaped metal film 32, the first external electrode 4, the second external electrode 5, the first electrode 6, the wiring layer of the first connection wiring J1, the second electrode 7, and the wiring layer of the second connection wiring J2 are formed by mixing tungsten powder with an organic solvent and an organic binder to produce a metal paste, printing the metal paste on predetermined positions of the ceramic green sheets for the insulating layer by a method such as screen printing or the like, and firing a laminate. The through-hole conductor of the first connection wiring J1 and the through-hole conductor of the second connection wiring J2 are formed by forming a hole for a through-hole conductor at a predetermined position of the ceramic green sheet for an insulating layer and filling the hole for a through-hole conductor with a metal paste.

Of the frame-shaped metal film 32, the first external electrode 4, the second external electrode 5, the first electrode 6, the first connection wiring J1, the second electrode 7, and the second connection wiring J2, a surface exposed to the outside may be coated with a nickel plating layer/gold plating layer as a metal plating layer by a plating method such as electrolytic plating or electroless plating. This achieves an effective decrease in the corrosion of the frame-shaped metal film 32, the first external electrode 4, the second external electrode 5, and the like. The metal plating layer is not limited to the nickel plating layer/gold plating layer, and may be another metal plating layer including a nickel plating layer/palladium plating layer/gold plating layer, or the like.

As in the examples illustrated in FIGs. 1 and 2 to 7, the battery package 1 may include a conductive metal plate 8 that presses the battery 200 to the bottom surface side of the recessed portion 21 of the insulation substrate 2 by an elastic force. The conductive metal plate 8 may be located on the opening side of the recessed portion 21 of the insulation substrate 2. The conductive metal plate 8 may be located inside the insulating frame body 31. The conductive metal plate 8 may have a metal plate body 81 which is electrically connected to the upper surface electrode 220 of the battery 200, and the shape of the metal plate body 81 in a plan view may be, for example, a circular shape.

The metal plate body 81 may have a size large enough to substantially cover the opening portion of the recessed portion 21 of the insulation substrate 2. In other words, the metal plate body 81 may have a size large enough to cover the upper surface electrode 220 of the battery 200 accommodated in the recessed portion 21 of the insulation substrate 2. The metal plate body 81 may be connected to the second electrode 7 while covering 50% or more of the opening area of the recessed portion 21 of the insulation substrate 2. In other words, the metal plate body 81 may be electrically connected to at least 50% or more of the area of the upper surface electrode 220 of the battery 200.

As in the examples illustrated in FIGs. 1, 3, 5, and 6, connecting pieces 82 which are electrically connected to the second electrodes 7 from above may be provided at a plurality of locations on the peripheral portion of the metal plate body 81. In other words, the conductive metal plate 8 may have a plurality of connecting pieces 82 on the peripheral portion thereof as connecting portions electrically connected to the second electrodes 7 from above. Each connecting piece 82 may be a strip-shaped portion projecting outward from the metal plate body 81. The plurality of connecting pieces 82 are part of the peripheral portion of the conductive metal plate 8. The plurality of connecting pieces 82 may be arranged rotationally symmetrically with respect to the center of the metal plate body 81. In a case in which each connecting piece 82 is a strip-shaped portion projecting outward from the metal plate body 81, the elastic force of each connecting piece 82 can be adjusted according to the width dimension of each connecting piece 82, thus adjusting the connection state (connectivity) between each connecting piece 82 and the second electrode 7.

As in the examples illustrated in FIGs. 1 and 5, each connecting piece 82 may extend toward a corresponding one of corner portions 3C of the frame portion 3. Each connecting piece 82 may extend toward a corner portion of the insulation substrate 2. As in the example illustrated in FIG. 8, each connecting piece 82 may extend toward a side portion (an intermediate portion between two corner portions 3C) of the frame portion 3. In the first embodiment, the number of the connecting pieces 82 is two, but may be one or three or more.

As in the examples illustrated in FIGs. 1, 4, 5, and 7, locking pieces 83 which are locked from below to the recessed step portions 31d of the insulating frame body 31 may be provided at a plurality of locations on the peripheral portion of the metal plate body 81. In other words, the conductive metal plate 8 may have a plurality of locking pieces 83 on the peripheral portion thereof as locking portions locked to the recessed step portions 31d of the insulating frame body 31 from below. Each locking piece 83 may be a strip-shaped portion projecting outward from the metal plate body 81. The plurality of locking pieces 83 are part of the peripheral portion of the conductive metal plate 8. The plurality of locking pieces 83 may be arranged rotationally symmetrically with respect to the center of the metal plate body 81.

As in the example illustrated in FIGs. 1 and 5, each locking piece 83 may extend toward a corresponding one of the corner portions 3C of the frame portion 3. Each connecting piece 82 may extend toward a corresponding one of the corner portions 3C of the frame portion 3, and each locking piece 83 may extend toward a corresponding one of the corner portions 3C of the frame portion 3. In this case, two connecting pieces 82 may extend in one diagonal direction of the rectangular insulation substrate 2, and two locking pieces 83 may extend in the other diagonal direction of the rectangular insulation substrate 2. As in the example illustrated in FIG. 8, each locking piece 83 may extend toward the side portion of the frame portion 3. In the first embodiment, the number of the locking pieces 83 is two, but may be three or more.

In the battery package 1, each locking piece 83 of the conductive metal plate 8 is locked to a corresponding one of the recessed step portions 31d of the insulating frame body 31 from below, so that the conductive metal plate 8 presses the battery 200 to the bottom surface side of the recessed portion 21 of the insulation substrate 2 by the elastic force. This allows the battery 200 to be mechanically fixed to the bottom portion of the recessed portion 21 of the insulation substrate 2. When each locking piece 83 is a strip-shaped portion projecting outward from the metal plate body 81, the elastic force of each locking piece 83 can be adjusted according to the width dimension of each locking piece 83.

As in the example illustrated in FIGs. 3, 4, 6, and 7, the battery package 1 may include a lid 9 having a flat plate shape and closing the opening of the frame portion 3. The shape of the lid 9 in a plan view may be, for example, a rectangular shape. The lid 9 may be bonded to the frame portion 3. The lid 9 may be electrically insulated from the conductive metal plate 8. The lid 9 is made of, for example, a ceramic or a metal. As the constituent material of the lid 9, a material having a small difference in thermal expansion compared to a ceramic, such as an iron-nickel (Fe-Ni) alloy or an iron-nickel-cobalt (Fe-Ni-Co) alloy may be used. The lid 9, in a plan view, may have a shape other than a rectangular shape as long as the lid 9 can close the opening of the frame portion 3.

The lid 9 and the frame portion 3 may be bonded using a bonding material such as a brazing material. The lid 9 and the frame portion 3 may be bonded using glass, a brazing material, or a resin material as a bonding material in order to increase the airtightness of the battery module 100. In a case in which the lid 9 made of a ceramic is bonded to the frame portion 3 with a brazing material, a metal film may also be provided on the outer peripheral portion of the lower surface of the lid 9, and the metal film may have the same configuration as, for example, the frame-shaped metal film 32.

The lid 9 made of a metal may be bonded to the metal frame body 33 by welding such as seam welding in order to increases the airtightness of the battery module 100. In a case in which the metal frame body 33 is omitted from the configuration of the frame portion 3, the lid 9 made of a metal may be bonded to the frame-shaped metal film 32 by welding such as direct seam welding, laser welding, or electron beam welding. The bonding using the seam welding, the direct seam welding, the laser welding, or the electron beam welding is the bonding by local heating of the bonding portion, reducing the effect of heat on the battery 200 compared with the brazing bonding which is the bonding by overall heating (reflow heating).

The battery package 1 is hermetically sealed under a low dew point of -40°C or less, such as in a nitrogen atmosphere, an argon atmosphere, or a vacuum atmosphere. This maintains the circumference of the battery 200 in a low-dew-point environment, helping prevent an external ingress of moisture and oxygen to the battery package 1, and thus decreasing the risk of deterioration of the battery material of the battery 200. Before the battery package 1 is sealed, moisture in the battery package 1 may be evaporated by prebaking or the like.

As in the example illustrated in FIGs. 1, 3, 5, and 6, the insulating frame body 31 has, on the upper surface thereof, a plurality of first cutout portions 31n connected to the recessed portion 21 of the insulation substrate 2. The plurality of first cutout portions 31n may be arranged rotationally symmetrically with respect to the center of the insulating frame body 31. The second electrodes 7 may overlap the first cutout portions 31n of the insulating frame body 31 in a plan view. The front end side of each connecting piece 82 of the conductive metal plate 8 may overlap each first cutout portion 31n of the insulating frame body 31 in a plan view. In other words, before the lid 9 closes the opening of the frame portion 3, the upper side (above) of each connecting piece 82 of the conductive metal plate 8 may be open.

The insulating frame body 31 may have a plurality of second cutout portions on the upper side of the recessed step portions 31d. A part of each locking piece 83 of the conductive metal plate 8 may overlap each second cutout portion of the insulating frame body 31 in a plan view. As in the example illustrated in FIGs. 1 and 5, in the battery package 1, the second cutout portions may be omitted from the configuration of the insulating frame body 31. The insulating frame body 31 having the plurality of first cutout portions 31n and the plurality of second cutout portions is formed by punching a ceramic green sheet for the insulating layer.

As in the example illustrated in FIGs. 9 and 10, the insulating frame body 31 may have a guide portion 31g on the upper side of each of the recessed step portions 31d. The cross-sectional shape of the guide portion 31g of the insulating frame body 31 may be a stepped shape or a tapered shape so as to approach the center line 21s of the recessed portion 21 of the insulation substrate 2 in a downward direction. The insulating frame body 31 having the guide portion 31g is formed by punching a ceramic green sheet for the insulating layer.

As in the example illustrated in FIGs. 1 and 3 to 7, the battery module 100 according to the first embodiment includes the battery package 1 according to the first embodiment and the battery 200 accommodated in the recessed portion 21 of the insulation substrate 2 of the battery package 1. The lower surface electrode 201 of the battery 200 may be electrically connected to the first electrode 6. The upper surface electrode 202 of the battery 200 may be electrically connected to the conductive metal plate 8. Since the first external electrode 4 and the second external electrode 5 are located on the second surface 2b of the insulation substrate 2, the battery package 1 and the battery module 100 can be surface-mounted on a mounting substrate.

The battery 200 may be a battery having a positive electrode and a negative electrode on the top and bottom, respectively, and may be, for example, an all-solid-state battery in which a negative electrode layer, an electrolyte layer, and a positive electrode layer are layered. The battery 200 may include current collectors on the outer side of the negative electrode layer and the outer side of the positive electrode layer, respectively. One of the negative electrode layer and the positive electrode layer of the all-solid-state battery is the lower surface electrode 210 of the battery 200, and the other layer of the negative electrode layer and the positive electrode layer of the all-solid-state battery is the upper surface electrode 220 of the battery 200. The battery 200 may be a coin battery in which a positive electrode layer, an electrolyte layer, a negative electrode layer, and a current collector layer are sealed in a metal exterior material. One electrode of the coin battery is the lower surface electrode 210 of the battery 200, and the other electrode of the coin battery is the upper surface electrode 220 of the battery 200.

In the battery package 1 and the battery module 100, the second electrode 7, which is a metallized pad, is located between the recessed portion 21 on a surface including the first surface 2a of the insulation substrate 2 and the frame portion 3 in a plan view of the first surface 2a of the insulation substrate 2. Therefore, in the manufacturing stage of the battery module 100, the second electrodes 7 are located at positions visible from the outside, and the finished state of the battery package 1 can be easily checked. Specifically, it is easy to check the surface state of the second electrodes 7 (including checking for defects during printing) and to measure plating thickness.

In the battery package 1 and the battery module 100, the conductive metal plate 8 has the plurality of connecting pieces 82, on the peripheral portion thereof, as connecting portions to be electrically connected to the second electrodes 7 from above. Therefore, in the manufacturing stage of the battery module 100, the connection state between the second electrode 7, which is the metallized pad, and the plurality of connecting pieces 82 can be checked easily by visual inspection.

Therefore, according to the first embodiment of the present disclosure, in the manufacturing stage of the battery module 100, determination of whether the battery module 100 is a non-defective product or a defective product can be performed easily by visual inspection, thus decreasing the risk of unexpectedly producing a defective product (operational effect (1)).

In the battery package 1 and the battery module 100, the lid 9 is electrically insulated from the conductive metal plate 8. Therefore, according to the first embodiment of the present disclosure, the risk of short-circuiting between the lid 9 and other components can be decreased, while efficiently extracting the electric power from the battery 200 without discharging the electric power from the lid 9 to the outside (operational effect (2)).

In particular, when the conductive metal plate 8 is located inside the insulating frame body 31, the insulation between the second electrode and the lid 9 or the like can be further enhanced. Therefore, according to the first embodiment of the present disclosure, the risk of short-circuiting between the conductive metal plate 8 and the lid 9 or the like due to spreading of the brazing material or the like can be decreased (operational effect (3)).

When the metal plate body 81 is connected to the second electrodes 7 while covering 50% or more of the opening area of the recessed portion 21 of the insulation substrate 2, the metal plate body 81 can be electrically connected to at least 50% of the area of the upper surface electrode 202 of the battery 200. Thus, according to the first embodiment of the present disclosure, a connecting resistance between the metal plate body 81 and the upper surface electrode 220 of the battery 200 is reduced, and the power extraction efficiency is increased. When the lid 9 is bonded or the battery module 100 is mounted, the battery 200 can be protected from radiant heat from the lid 9 (operational effect (4)).

When each connecting piece 82 extends toward a corresponding one of the corner portions 3C of the frame portion 3, the size of the insulation substrate 2 in a plan view and the size of the frame portion 3 in a plan view can be reduced as compared with the case in which each connecting piece 82 extends toward a side portion of the frame portion 3. Thus, according to the first embodiment of the present disclosure, the size of the battery package 1 and the battery module 100 can be reduced (operational effect (5)).

When each locking piece 83 extends toward a corresponding one of the corner portions 3C of the frame portion 3, the size of the insulation substrate 2 in a plan view and the size of the frame portion 3 in a plan view can be reduced as compared with the case in which each locking piece 83 extends toward a side portion of the frame portion 3. Thus, according to the first embodiment of the present disclosure, the size of the battery package 1 and the battery module 100 can be reduced (operational effect (6)).

When each of the second electrodes 7 overlaps a corresponding one of the first cutout portions 31n of the insulating frame body 31 in a plan view, each connecting piece 82 can be easily connected electrically to a corresponding one of the second electrodes 7 from above without bringing each connecting piece 82 into contact with the inner side surface of the insulating frame body 31. Thus, according to the first embodiment of the present disclosure, the assemblability (manufacturability) of the battery module 100 can be enhanced, while increasing the connectivity between the connecting pieces 82 and the second electrodes 7 by suppressing the positional deviation of each connecting piece 82 in the surface direction (direction along the first surface 2a).

When a part of each locking piece 83 overlaps a corresponding second cutout portion of the insulating frame body 31 in a plan view, each locking piece 83 can be easily inserted into a corresponding one of the recessed step portions 31d of the insulating frame body 31 while being elastically deformed. Therefore, according to the first embodiment of the present disclosure, the assemblability of the battery module 100 can be further improved.

When the cross-sectional shape of the guide portion 31g of the insulating frame body 31 is a stepped shape or a tapered shape as described above, each locking piece 83 can be inserted into a corresponding one of the recessed step portions 31d of the insulating frame body 31 while being elastically deformed. Thus, according to the first embodiment of the present disclosure, the assemblability of the battery module 100 can be improved.

### Second Embodiment

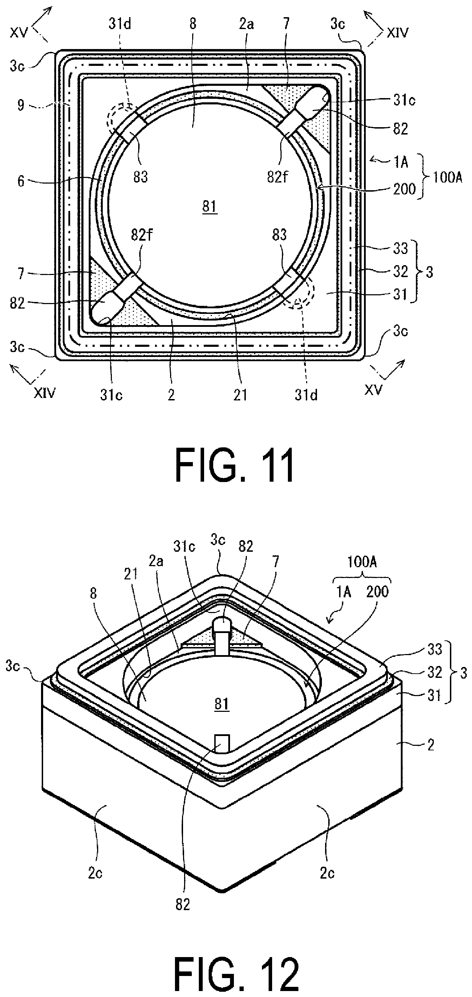

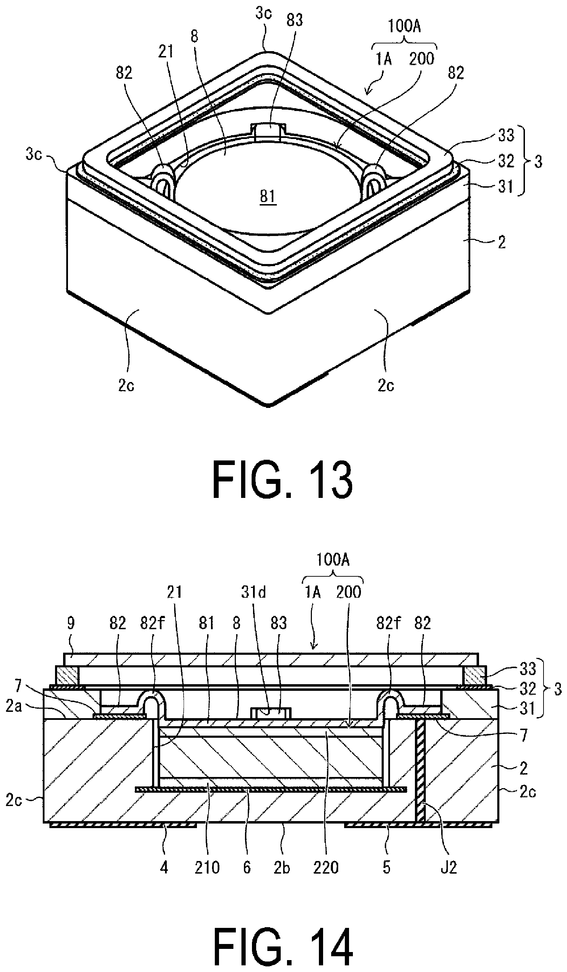

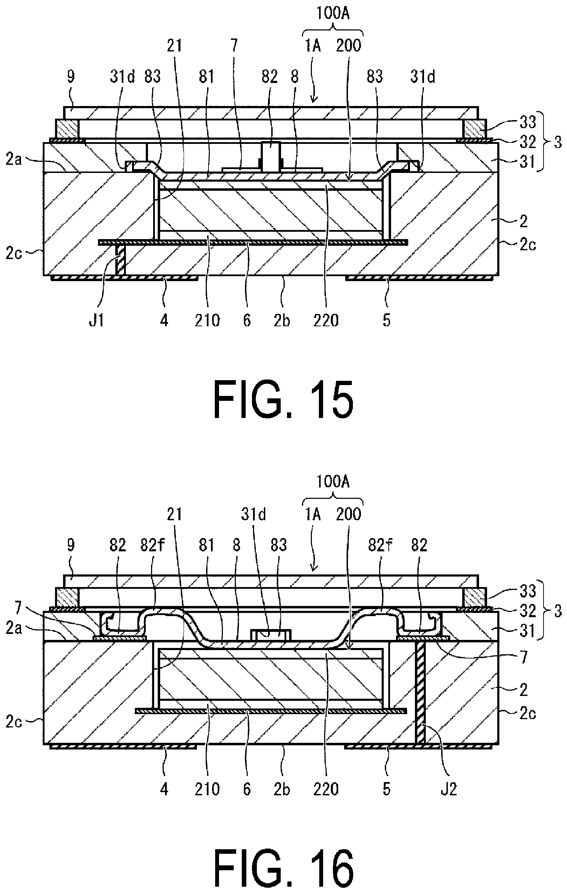

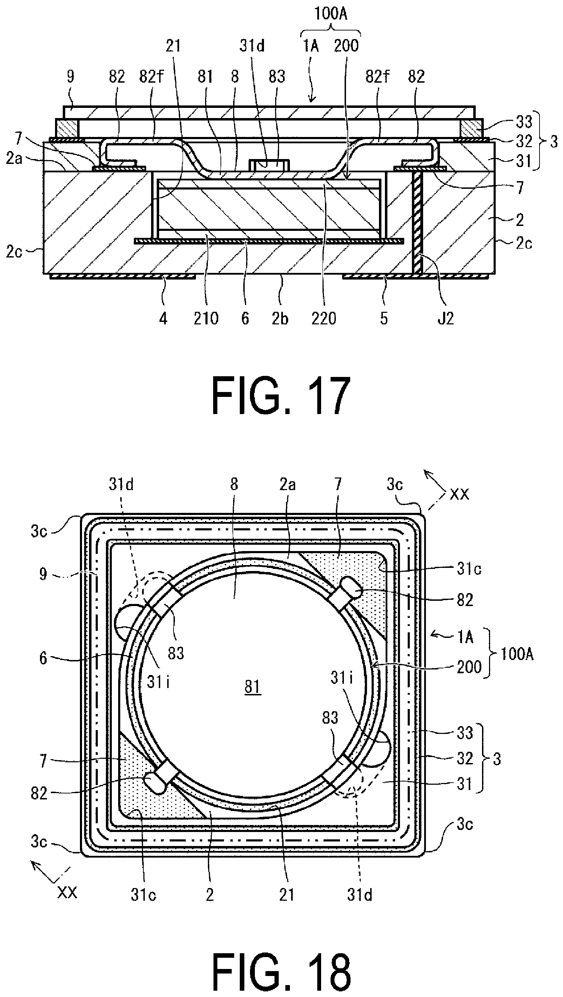

A battery package 1A and a battery module 100A according to a second embodiment will be described with reference to FIGs. 11 to 23. FIG. 11 is a schematic plan view illustrating the battery package 1A and the battery module 100A according to the second embodiment. FIG. 12 is a schematic perspective view of the battery package 1A illustrated in FIG. 11. FIG. 13 is a schematic perspective view of the battery package 1A illustrated in FIG. 11. FIG. 14 is a schematic cross-sectional view taken along line XIV-XIV in FIG. 11. FIG. 15 is a schematic cross-sectional view taken along line XV-XV in FIG. 11. FIGs. 16 and 17 are schematic cross-sectional views illustrating the battery package 1A according to another aspect of the second embodiment.

As in the example illustrated in FIGs. 11 to 15, the battery module 100A according to the second embodiment includes the battery package 1A according to the second embodiment and the battery 200 mounted on the battery package 1A. The battery package 1A according to the second embodiment has the same configuration as the battery package 1 according to the first embodiment except for a part of the configuration. Among the configurations of the battery package 1A according to the second embodiment, configurations that are different from those of the battery package 1 according to the first embodiment will be described. For convenience of description, members having the same functions as the members described in the first embodiment are denoted by the same reference signs.

As in the example illustrated in FIG. 11, the insulating frame body 31 may have two inner corner portions 31C on the inner side surface thereof. The two inner corner portions 31C may be disposed rotationally symmetrically with respect to the center of the insulating frame body 31. In the second embodiment, the number of the recessed step portions 31d serving as receiving portions (fixed portions) is two, but may be three or more. The insulating frame body 31 may have an annular recessed step portion on the inner side surface thereof instead of the plurality of recessed step portions 31d.

As in the example illustrated in FIGs. 11, 12, and 14, the second electrodes 7 may be located between the recessed portion 21 on the first surface 2a of the insulation substrate 2 and the inner corner portion 31C side of the insulating frame body 31. In a plan view of the first surface 2a of the insulation substrate 2, the second electrodes 7 may be located between the recessed portion 21 on a surface including the first surface 2a of the insulation substrate 2 and the frame portion 3. The second electrodes 7 may be bonded between the recessed portion 21 on the first surface 2a of the insulation substrate 2 and the inner corner portion 31C side of the insulating frame body 31. The second electrodes 7 may extend between the insulation substrate 2 and the insulating frame body 31.

As in the example illustrated in FIG. 11, each connecting piece 82 of the conductive metal plate 8 may extend toward the inner corner portion 31C of the insulating frame body 31. Since each connecting piece 82 of the conductive metal plate 8 extends in this manner, the upper side (above) of each connecting piece 82 of the conductive metal plate 8 may be open before the lid 9 covers the frame portion 3.

As in the example illustrated in FIGs. 14 and 16, each connecting piece 82 of the conductive metal plate 8 may have an inverted U-shaped curved portion 82f straddling the edge portion of the recessed portion 21 of the insulation substrate 2. As in the example illustrated in FIG. 17, each connecting piece 82 of the conductive metal plate 8 may have an L-shaped curved portion 82f straddling the edge portion of the recessed portion 21 of the insulation substrate 2. As in the example illustrated in FIGs. 16 and 17, the front end portion side (front end side) of each connecting piece 82 of the conductive metal plate 8 may be bent in an arc shape.

In the battery package 1A, each locking piece 83 of the conductive metal plate 8 is locked from below to a corresponding one of the recessed step portions 31d of the insulating frame body 31, so that the conductive metal plate 8 presses the battery 200 to the bottom surface side of the recessed portion 21 of the insulation substrate 2 by elastic force. This allows the battery 200 to be mechanically fixed to the bottom portion of the recessed portion 21 of the insulation substrate 2.

As in the example illustrated in FIGs. 11 and 12, the battery module 100A according to the second embodiment includes the battery package 1A according to the second embodiment and the battery 200 accommodated in the recessed portion 21 of the insulation substrate 2 of the battery package 1A. The lower surface electrode 201 of the battery 200 may be electrically connected to the first electrode 6. The upper surface electrode 202 of the battery 200 may be electrically connected to the conductive metal plate 8. Since the first external electrode 4 and the second external electrode 5 are located on the second surface 2b of the insulation substrate 2, the battery package 1A and the battery module 100A can be surface-mounted on a mounting substrate.

In the battery package 1A and the battery module 100A according to the second embodiment, the second electrode 7, which is a metallized pad, is located between the recessed portion 21 on a surface including the first surface 2a of the insulation substrate 2 and the frame portion 3 in a plan view of the first surface 2a of the insulation substrate 2. Therefore, in the manufacturing stage of the battery module 100A, the second electrodes 7 are located at positions visible from the outside, and the finished state of the battery package 1A can be easily checked. Specifically, it is easy to check the surface state of the second electrodes 7 (including checking for defects during printing) and to measure plating thickness.

In the battery package 1A and the battery module 100A, the conductive metal plate 8 has the plurality of connecting pieces 82 as the connecting portions electrically connected to the second electrodes 7 from above at the peripheral portion thereof. Thus, in the manufacturing stage of the battery module 100A, the external appearance of the connection state between the second electrode 7, which is the metallized pad, and the connecting pieces 82 of the conductive metal plate 8 can be easily checked by visual inspection.

Therefore, according to the second embodiment of the present disclosure, in the manufacturing stage of the battery module 100A, determination of whether the battery module 100A is a non-defective product or a defective product can be performed easily by visual inspection, thus eliminating the risk of unexpectedly producing a defective product.

When the upper side of each connecting piece 82 of the conductive metal plate 8 is opened before the lid 9 covers the frame portion 3, each connecting piece 82 can easily be connected electrically to a corresponding one of the second electrodes 7 from above without bringing each connecting piece 82 into contact with the inner side surface of the insulating frame body 31. Thus, according to the second embodiment of the present disclosure, the assemblability (manufacturability) of the battery module 100A can be further improved.

When the second electrodes 7 are located between the recessed portion 21 on the first surface 2a of the insulation substrate 2 and the inner corner portion 31C side of the insulating frame body 31, the area of the second electrodes 7 can be increased. This facilitates the electrical connection between each connecting piece 82 and a corresponding one of the second electrodes 7 from above and increases the connection strength between the connecting piece 82 and the second electrode 7. Thus, according to the second embodiment of the present disclosure, the assemblability and the connection reliability of the battery module 100A can be further improved.

When each connecting piece 82 has a curved portion 82f, each connecting piece 82 can be easily connected electrically to a corresponding one of the second electrodes 7 from above without bringing each connecting piece 82 into contact with (interfere with) the edge portion of the recessed portion 21 of the insulation substrate 2. The elastic force of the conductive metal plate 8 can be set according to the shape of the curved portion 82f of each connecting piece 82, allowing maintenance of the connection state between the connecting pieces 82 and the second electrode 7. Thus, according to the second embodiment of the present disclosure, the assemblability and the connection reliability of the battery module 100A can be further improved.

In a case in which the front end side of each connecting piece 82 is bent in an arc shape, even when the front end side of the connecting piece 82 comes into contact with the inner side surface of the insulating frame body 31, the front end side of the connecting piece 82 is not caught, and each connecting piece 82 can be easily connected electrically to a corresponding one of the second electrodes 7 from above. Thus, according to the example of the second embodiment of the disclosure, the assemblability of the battery module 100A can be further improved.

In addition, also in the second embodiment of the present disclosure, the same operational effects as the above-described effects (2), (3), (4), (5), and (6) are achieved.

### Variation 1 of Second Embodiment

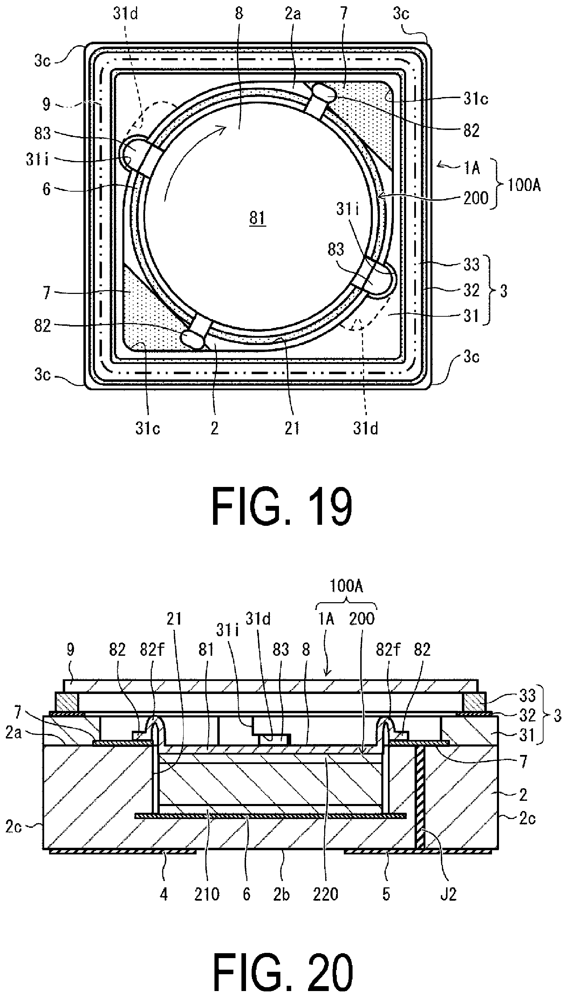

The battery package 1A according to a first variation of the second embodiment will be described with reference to FIGs. 18 to 20. FIG. 18 is a schematic plan view illustrating the battery package 1A according to the first variation of the second embodiment. FIG. 19 is a schematic plan view illustrating a state in which the locking pieces 83 of the conductive metal plate 8 are inserted into an insertion port 31i of the insulating frame body 31. FIG. 20 is a schematic cross-sectional view taken along line XX-XX in FIG. 18.

As in the example illustrated in FIGs. 18 to 20, in the battery package 1A according to the first variation of the second embodiment, the insulating frame body 31 may have a plurality of insertion ports 31i which are open to the upper side and to the recessed portion 21 side of the insulation substrate 2. Each insertion port 31i of the insulating frame body 31 may be connected to a corresponding one of the recessed step portions 31d.

In the battery package 1A of the first variation of the second embodiment, by simply rotating the conductive metal plate 8 in one direction (the arrow direction in FIG. 19), each locking piece 83 can be inserted into a corresponding one of the insertion ports 31i of the insulating frame body 31, and each locking piece 83 can be easily locked from below to a corresponding one of the recessed step portions 31d of the insulating frame body 31. Thus, in the variation of the second embodiment according to the present disclosure, the assemblability (manufacturability) of the battery module 100A can be further improved.

Furthermore, in the first variation of the second embodiment according to the present disclosure, the same operational effect as that of the second embodiment described above is achieved.

### Variation 2 of Second Embodiment

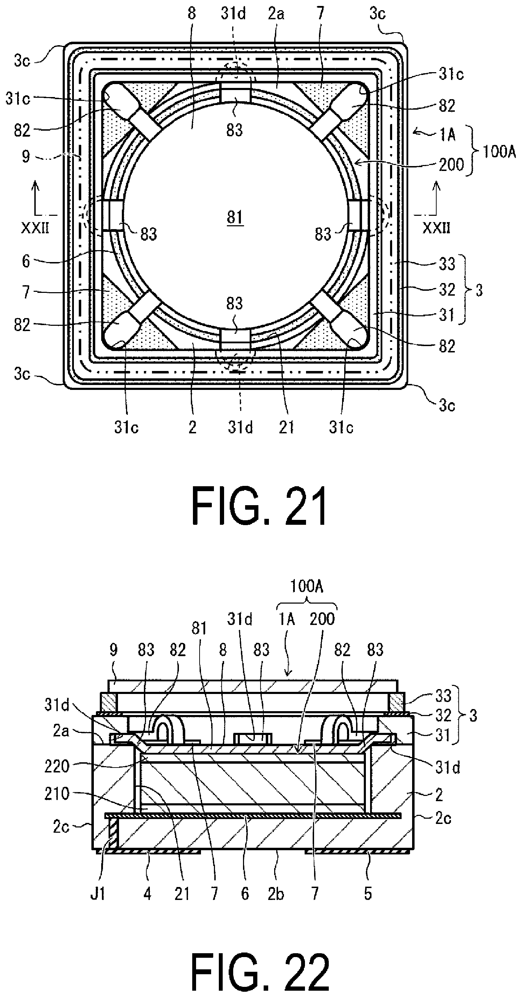

The battery package 1A according to a second variation of the second embodiment is described with reference to FIGs. 21 and 22. FIG. 21 is a schematic plan view illustrating a battery package and a battery module according to the second variation of the second embodiment. FIG. 22 is a schematic cross-sectional view taken along line XXII-XXII in FIG. 21.

As in the example illustrated in FIGs. 21 and 22, the insulating frame body 31 may have four inner corner portions 31C on the inner side surface thereof. The four inner corner portions 31C may be arranged rotationally symmetrically with respect to the center of the insulating frame body 31. In the second variation of the second embodiment, the number of the recessed step portions 31d may be four. The number of the second electrodes 7 may be four. The number of the connecting pieces 82 and the number of the locking pieces 83 may be four. The number of the recessed step portions 31d, the number of the second electrodes 7, the number of the connecting pieces 82, and the number of the locking pieces 83 are each not limited to four, and may be three or five or more.

In the battery package 1A according to the second variation of the second embodiment, the contact area between the second electrodes 7 and the connecting pieces 82 increases, providing a low resistance connection between the second electrodes 7 and the conductive metal plate 8. Thus, according to the second variation of the second embodiment according to the present disclosure, the electric power of the battery 200 can be more efficiently extracted.

In the battery package 1A according to the second variation of the second embodiment, the conductive metal plate 8 can use its elastic force to uniformly press the battery 200 with an increased force to the bottom surface side of the recessed portion 21 of the insulation substrate 2. Thus, according to the variation of the second embodiment of the present disclosure, the fixing force that fixes the battery 200 to the bottom portion of the recessed portion 21 of the insulation substrate 2 can be increased, thus improving the long-term reliability of the battery module 100A. The connectivity between the lower surface electrode 201 of the battery 200 and the first electrode 6 can be enhanced, whereby the electric power of the battery 200 can be extracted more efficiently.

In addition, in the second variation of the second embodiment of the disclosure, the same operational effect as that of the second embodiment can also be achieved.

### Third Embodiment

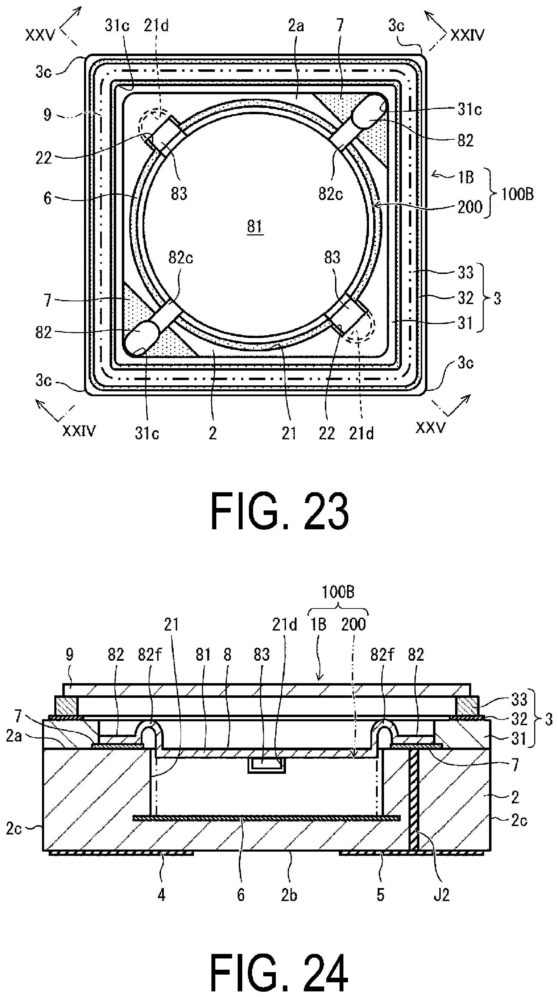

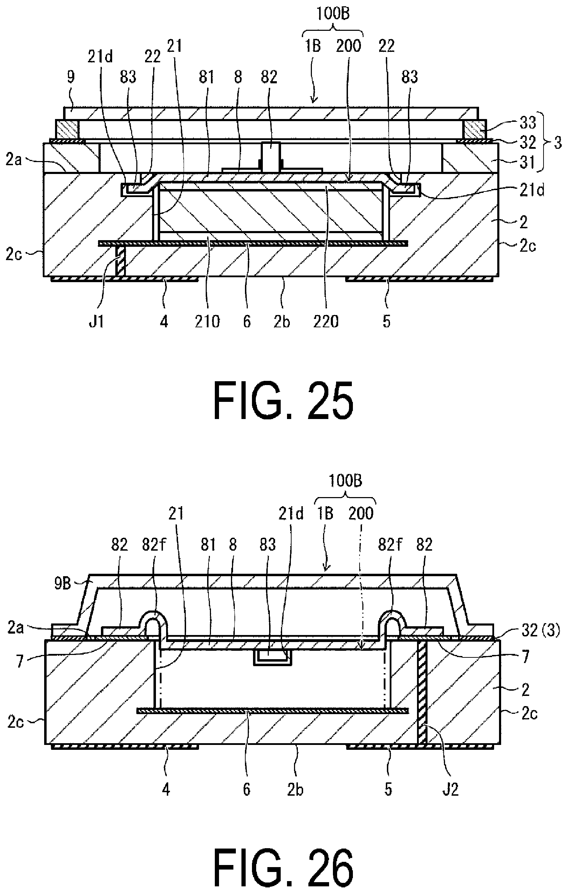

A battery package 1B and a battery module 100B according to a third embodiment will be described with reference to FIGs. 23 to 25. FIG. 23 is a schematic plan view illustrating the battery package 1B and the battery module 100B according to the third embodiment. FIG. 24 is a schematic cross-sectional view taken along line XXIV-XXIV in FIG. 23. FIG. 25 is a schematic cross-sectional view taken along line XXV-XXV in FIG. 24. FIG. 26 is a schematic cross-sectional view illustrating the battery package 1B according to another aspect of the third embodiment.

As in the example illustrated in FIGs. 23 to 25, the battery module 100B according to the third embodiment includes the battery package 1B according to the third embodiment and the battery 200 mounted on the battery package 1B. The battery package 1B according to the third embodiment has the same configuration as the battery package 1A according to the second embodiment except for a part of the configuration. Among the configurations of the battery package 1B according to the third embodiment, configurations that are different from those of the battery package 1A according to the second embodiment will be described. For convenience of description, members having the same functions as the members described in the first and second embodiments are denoted by the same reference signs.

As in the examples illustrated in FIGs. 23 to 25, the insulating frame body 31 may have four inner corner portions 31C on the inner surface thereof. The four inner corner portions 31C may be arranged rotationally symmetrically with respect to the center of the insulating frame body 31. The recessed portion 21 of the insulation substrate 2 may have a plurality of recessed step portions 21d as receiving portions, and the plurality of recessed step portions 21d may be located on the inner side surface of the recessed portion 21 of the insulation substrate 2. The plurality of recessed step portions 21d may be arranged rotationally symmetrically with respect to the center of the recessed portion 21 of the insulation substrate 2. In the third embodiment, the number of the recessed step portions 21d is two, but may be three or more. Instead of providing the plurality of recessed step portions 21d on the inner side surface of the recessed portion 21 of the insulation substrate 2, an annular recessed step portion may be provided.

As in the example illustrated in FIGs. 23 and 25, each locking piece 83 of the conductive metal plate 8 may be locked to a corresponding one of the recessed step portions 21d of the insulation substrate 2 from below. The insulation substrate 2 may have a second cutout portion 22 on the upper side of each recessed step portion 21d. The plurality of second cutout portions 22 may be arranged rotationally symmetrically with respect to the center of the recessed portion 21 of the insulation substrate 2. A part of each locking piece 83 of the conductive metal plate 8 may overlap a corresponding one of the second cutout portions 22 of the insulation substrate 2 in a plan view. In the battery package 1B, the second cutout portions 22 may be omitted from the configuration of the insulation substrate 2. The insulation substrate 2 having the recessed portion 21 and the plurality of second cutout portions 22 is formed by punching a ceramic green sheet for the insulating layer.

In the battery package 1B, each locking piece 83 of the conductive metal plate 8 is locked to a corresponding one of the recessed step portions 21d of the recessed portion 21 of the insulation substrate 2 from below, allowing the conductive metal plate 8 to press the battery 200 to the bottom surface side of the recessed portion 21 of the insulation substrate 2 by the elastic force. This allows the battery 200 to be mechanically fixed to the bottom portion of the recessed portion 21 of the insulation substrate 2.

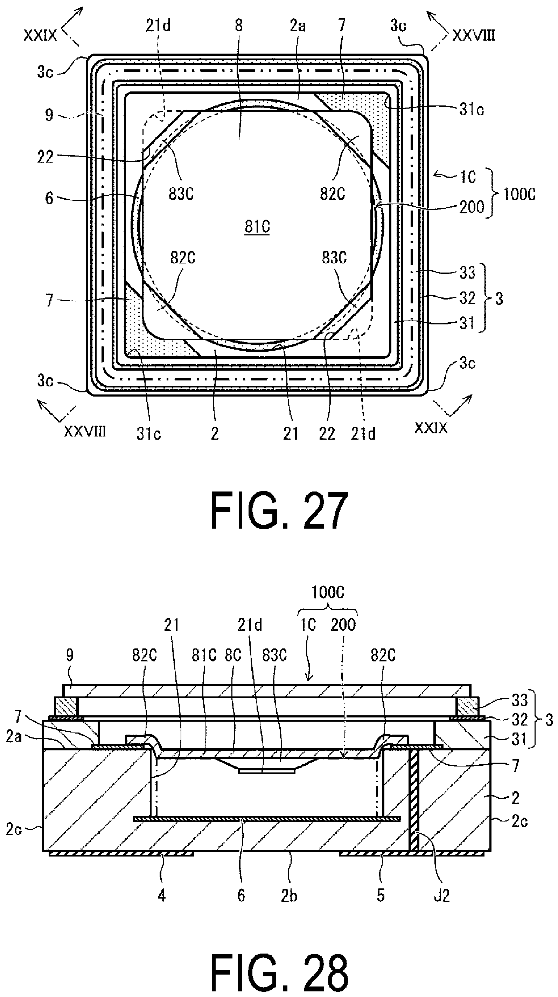

As in the example illustrated in FIG. 27, in the battery package 1B, the insulating frame body 31 and the metal frame body 33 may be omitted from the configuration of the frame portion 3. In this case, the thickness of the battery package 1B and the battery module 100B can be reduced.

As in the example illustrated in FIG. 26, the battery package 1B may include a lid 9B having a cap shape to close the opening of the frame portion 3. The lid 9B may be bonded to the frame-shaped metal film 32 which is the frame portion 3. The lid 9B may be electrically insulated from the conductive metal plate 8. The lid 9B is made of, for example, a metal having a small difference in thermal expansion coefficient from a ceramic such as an iron-nickel (Fe-Ni) alloy or an iron-nickel-cobalt (Fe-Ni-Co) alloy is used. The lid 9B may also be made of a ceramic instead of a metal. When the lid 9B is made of a metal, the lid 9B can be produced by pressing a metal plate. When the lid 9B is made of a ceramic, a laminate of ceramic green sheets may be fired in the same manner as the insulation substrate 2, or ceramic powder may be press-molded into a cap shape and then fired.

As in the example illustrated in FIGs. 23 to 25, the battery module 100B according to the third embodiment includes the battery package 1B according to the third embodiment and the battery 200 accommodated in the recessed portion 21 of the insulation substrate 2 of the battery package 1B. The lower surface electrode 210 of the battery 200 may be electrically connected to the first electrode 6. The upper surface electrode 220 of the battery 200 may be electrically connected to the conductive metal plate 8. Since the first external electrode 4 and the second external electrode 5 are located on the second surface 2b of the insulation substrate 2, the battery package 1B and the battery module 100B can be surface-mounted on a mounting substrate. In FIGs. 24 and 26, only the outer shape of the battery 200 is illustrated by double-dot lines.

In the battery package 1B and the battery module 100B according to the third embodiment, the second electrode 7, which is the metallized pad, is located between the recessed portion 21 on a surface including the first surface 2a of the insulation substrate 2 and the frame portion 3 in a plan view of the first surface 2a of the insulation substrate 2. Therefore, in the manufacturing stage of the battery module 100B, the second electrodes 7 are located at positions visible from the outside, and the finished state of the battery package 1B can be easily checked. Specifically, it is easy to check the surface state of the second electrodes 7 (including checking for defects during printing) and to measure plating thickness.

In the battery package 1B and the battery module 100B, the conductive metal plate 8 has the plurality of connecting pieces 82 on the peripheral portion thereof as the connecting portions electrically connected to the second electrodes 7 from above. Therefore, in the manufacturing stage of the battery module 100B, the connection state between the second electrode 7, which is the metallized pad, and the connecting pieces 82 of the conductive metal plate 8 can be easily checked by visual inspection.

Therefore, according to the third embodiment of the present disclosure, in the manufacturing stage of the battery module 100B, determination on whether the battery module 100B is a non-defective product or a defective product can be performed easily by visual inspection, thus eliminating the concern of unexpectedly producing a defective product.

When a part of each locking piece 83 overlaps a corresponding one of the second cutout portions 22 of the insulation substrate 2 in a plan view, each locking piece 83 is easily inserted into and locked to a corresponding one of the recessed step portions 31d of the insulating frame body 31 while being elastically deformed. Thus, according to the third embodiment of the present disclosure, the assemblability of the battery module 100B can be further improved.

In addition, according to the third embodiment of the present disclosure, the same operational effect as the example of the second embodiment of the present disclosure is achieved.

### Fourth Embodiment

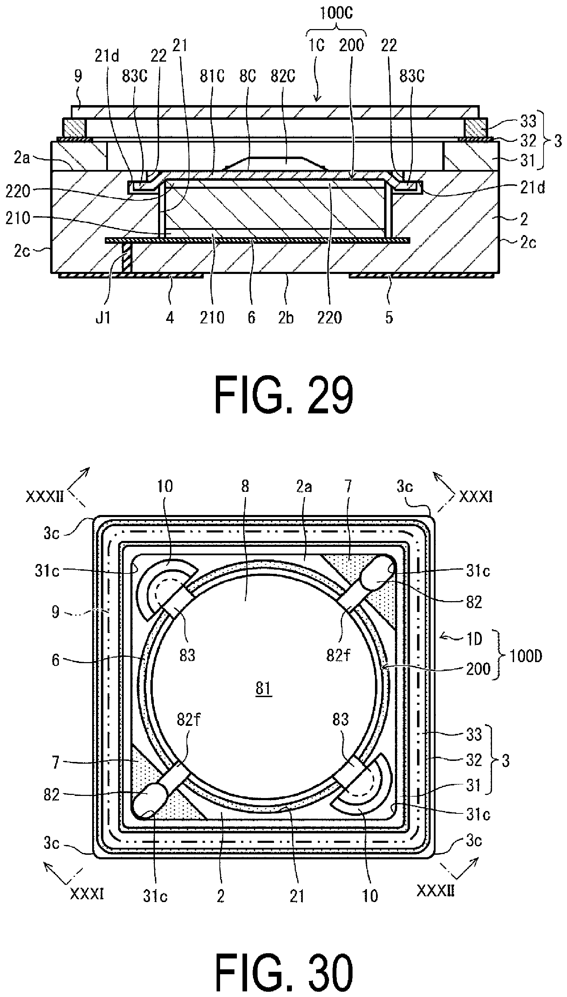

A battery package 1C and a battery module 100C according to a fourth embodiment is described with reference to FIGs. 27 to 29. FIG. 27 is a schematic plan view illustrating the battery package 1C and the battery module 100C according to the fourth embodiment. FIG. 28 is a schematic cross-sectional view taken along line XXVIII-XXVIII in FIG. 27. FIG. 29 is a schematic cross-sectional view taken along line XXIX-XXIX in FIG. 27.

As in the example illustrated in FIGs. 27 to 29, the battery module 100C according to the fourth embodiment includes the battery package 1C according to the fourth embodiment and the battery 200 mounted on the battery package 1C. The battery package 1C according to the fourth embodiment has the same configuration as the battery package 1B according to the third embodiment except for a part of the configuration. Among the configurations of the battery package 1C according to the fourth embodiment, configurations that are different from those of the battery package 1B according to the third embodiment will be described. For convenience of description, members having the same functions as the members described in the first to third embodiments are denoted by the same reference signs.

As in the example illustrated in FIGs. 27 to 29, the battery package 1C may include a conductive metal plate 8C that presses the battery 200 to the bottom surface side of the recessed portion 21 of the insulation substrate 2 by the elastic force. The conductive metal plate 8C may be located on the opening side of the recessed portion 21 of the insulation substrate 2. The conductive metal plate 8C may be located inside the insulating frame body 31. The conductive metal plate 8C may have a rectangular shape in a plan view. The conductive metal plate 8C may have a metal plate body 81C electrically connected to the upper surface electrode 202 of the battery 200.

The metal plate body 81C may have a size large enough to substantially cover the opening portion of the recessed portion 21 of the insulation substrate 2. In other words, the metal plate body 81C may have a size large enough to cover the upper surface electrode 220 of the battery 200 accommodated in the recessed portion 21 of the insulation substrate 2. The metal plate body 81C may be connected to the second electrodes 7 while covering 50% or more of the opening area of the recessed portion 21 of the insulation substrate 2.

As in the example illustrated in FIGs. 27 and 28, the conductive metal plate 8C may have two connecting portions 82C electrically connected to the second electrodes 7 from above on two corner sides. The two connecting portions 82C are part of the peripheral portion of the conductive metal plate 8C, and may be corner portions of the rectangular conductive metal plate 8C. The two the connecting portions 82C may be disposed diagonally with respect to the center of the conductive metal plate 8C. A pair of the connecting portions 82C may be provided on the metal plate body 81C.

As in the example illustrated in FIGs. 27 and 29, the conductive metal plate 8C may have two locking portions 83C that are locked to corresponding ones of the recessed step portions 21d of the insulation substrate 2 from below on the remaining two corner sides. The two locking portions 83C are a part of the peripheral portion of the conductive metal plate 8C, and may be corner portions of the rectangular conductive metal plate 8C. The two locking portions 83C may be disposed diagonally with respect to the center of the conductive metal plate 8C. A pair of locking portions 83C may be provided on the metal plate body 81C.

The insulation substrate 2 may have each of the second cutout portions 22 on the upper side of a corresponding one of the recessed step portions 21d. A part of each locking piece 83C may overlap a corresponding one of the second cutout portions 22 of the insulation substrate 2 in a plan view. In the battery package 1C, the second cutout portions 22 may be omitted from the configuration of the insulation substrate 2.

In the battery package 1C, each locking portion 83C is locked to a corresponding one of the recessed step portion 21d of the insulating frame body 31 from below, so that the conductive metal plate 8C presses the battery 200 to the bottom surface side of the recessed portion 21 of the insulation substrate 2 by the elastic force. This allows the battery 200 to be mechanically fixed to the bottom portion of the recessed portion 21 of the insulation substrate 2.

As in the example illustrated in FIGs. 27 to 29, the battery module 100C according to the fourth embodiment includes a battery package 1C according to the fourth embodiment and the battery 200 accommodated in the recessed portion 21 of the insulation substrate 2 of the battery package 1C. The lower surface electrode 201 of the battery 200 may be electrically connected to the first electrode 6. The upper surface electrode 220 of the battery 200 may be electrically connected to the conductive metal plate 8. Since the first external electrode 4 and the second external electrode 5 are located on the second surface 2b of the insulation substrate 2, the battery package 1C and the battery module 100C can be surface-mounted on a mounting substrate. In FIG. 28, only the outer shape of the battery 200 is illustrated by double-dot lines.

In the battery package 1C and the battery module 100C according to the fourth embodiment, in a plan view of the first surface 2a of the insulation substrate 2, the second electrode 7, which is the metallized pad, is located between the recessed portion 21 on a surface including the first surface 2a of the insulation substrate 2 and the frame portion 3. Therefore, in the manufacturing stage of the battery module 100C, the second electrodes 7 are located at positions visible from the outside, and the finished state of the battery package 1C can be easily checked. Specifically, it is easy to check the surface state of the second electrodes 7 (including checking for defects during printing) and to measure plating thickness.

In the battery package 1C and the battery module 100C, the conductive metal plate 8C has the plurality of connecting portions 82C electrically connected to the second electrodes 7 from above on the two corner sides. Thus, in the manufacturing stage of the battery module 100C, the connection state between the second electrode 7, which is the metallized pad, and the connecting portions 82C can be easily checked by visual inspection.

Therefore, according to the fourth embodiment of the present disclosure, in the manufacturing stage of the battery module 100C, determination on whether the battery module 100C is a non-defective product or a defective product can be performed easily by visual inspection, thus eliminating the risk of unexpectedly producing a defective product.

When a part of each locking portion 83C overlaps a corresponding one of the second cutout portions 22 of the insulation substrate 2 in a plan view, each locking portion 83C is easily inserted into and locked to a corresponding one of the recessed step portions 21d of the insulation substrate 2 while being elastically deformed. Thus, according to the fourth embodiment of the present disclosure, the assemblability of the battery module 100B can be further improved.

In addition, according to the fourth embodiment of the present disclosure, the same operational effect as that of the second embodiment of the disclosure is achieved.

### Fifth Embodiment

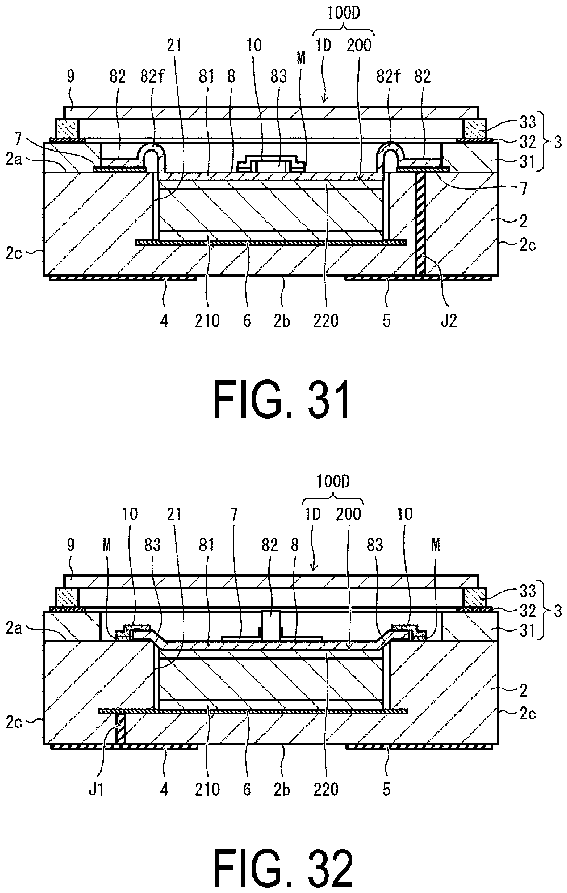

A battery package 1D and a battery module 100D according to a fifth embodiment will be described with reference to FIGs. 30 to 32. FIG. 30 is a schematic plan view illustrating the battery package 1D and the battery module 100D according to the fifth embodiment. FIG. 31 is a schematic cross-sectional view taken along line XXXI-XXXI in FIG. 30. FIG. 32 is a schematic cross-sectional view taken along line XXXII-XXXII in FIG. 30.

As in the example illustrated in FIGs. 30 to 32, the battery module 100D according to the fifth embodiment includes the battery package 1D according to the fifth embodiment and the battery 200 mounted on the battery package 1D. The battery package 1D according to the fifth embodiment has the same configuration as the battery package 1B according to the third embodiment except for a part of the configuration. Among the configurations of the battery package 1D according to the fifth embodiment, configurations that are different from those of the battery package 1 according to the third embodiment will be described. For convenience of description, members having the same functions as the members described in the first to fourth embodiments are denoted by the same reference sign.

As in the example illustrated in FIGs. 30 to 32, instead of the recessed portion 21 of the insulation substrate 2 having the plurality of recessed step portions 21d on the inner side surface thereof, a plurality of clasps 10 may be located as receiving portions at the edge portion on the opening side of the recessed portions 21 on the first surface 2a of the insulation substrate 2. The plurality of clasps 10 may be arranged rotationally symmetrically with respect to the center of the recessed portion 21 of the insulation substrate 2. Each clasp 10 may be located on the first surface 2a of the insulation substrate 2 between the recessed portion 21 and a corresponding one of the corner portions 3C of the insulating frame body 31. When each clasp 10 is bonded to the first surface 2a of the insulation substrate 2 with a brazing material, a metal film M having the same configuration as the frame-shaped metal film 32 may be located on the first surface 2a of the insulation substrate 2.

Each clasp 10 may be open to the recessed portion 21 side of the insulation substrate 2. The conductive metal plate 8 may have a plurality of locking pieces 83 on the peripheral portion thereof as locking portions to be locked with the clasps 10 from below.

In the battery package 1D, each locking piece 83 of the conductive metal plate 8 is locked with each clasp 10 from below, so that the conductive metal plate 8 presses the battery 200 to the bottom surface side of the recessed portion 21 side of the insulation substrate 2 by the elastic force. This allows the battery 200 to be mechanically fixed to the bottom portion of the recessed portion 21 of the insulation substrate 2.

As in the example illustrated in FIGs. 30 to 32, the battery module 100D according to the fifth embodiment includes the battery package 1D according to the fifth embodiment and the battery 200 accommodated in the recessed portion 21 of the insulation substrate 2 of the battery package 1D. The lower surface electrode 210 of the battery 200 may be electrically connected to the first electrode 6. The upper surface electrode 220 of the battery 200 may be electrically connected to the conductive metal plate 8. Since the first external electrode 4 and the second external electrode 5 are located on the second surface 2b of the insulation substrate 2, the battery package 1D and the battery module 100D can be surface-mounted on a mounting substrate.

In the battery package 1D and the battery module 100D according to the fifth embodiment, the second electrode 7, which is a metallized pad, is located between the recessed portion 21 on a surface including the first surface 2a of the insulation substrate 2 and the frame portion 3 in a plan view of the first surface 2a of the insulation substrate 2. Therefore, in the manufacturing stage of the battery module 100D, the second electrodes 7 are located at positions visible from the outside, and the finished state of the battery package 1D can be easily checked. Specifically, it is easy to check the surface state of the second electrodes 7 (including checking for defects during printing) and to measure plating thickness.

In the battery package 1D and the battery module 100D, the conductive metal plate 8 has the plurality of connecting pieces 82, on the peripheral portion thereof, as connecting portions electrically connected to the second electrodes 7 from above. Therefore, in the manufacturing stage of the battery module 100D, the connection state between the second electrode 7, which is a metallized pad, and the conductive metal plate 8 can be easily checked by visual inspection.

Therefore, according to the fifth embodiment of the present disclosure, in the manufacturing stage of the battery module 100D, determination of whether the battery module 100D is a non-defective product or a defective product can be performed easily by visual inspection, thus eliminating the risk of unexpectedly producing a defective product.

In addition, according to the fifth embodiment of the present disclosure, the same operational effect as that of the third embodiment of the present disclosure is achieved.

### Variation 1 of Fifth Embodiment

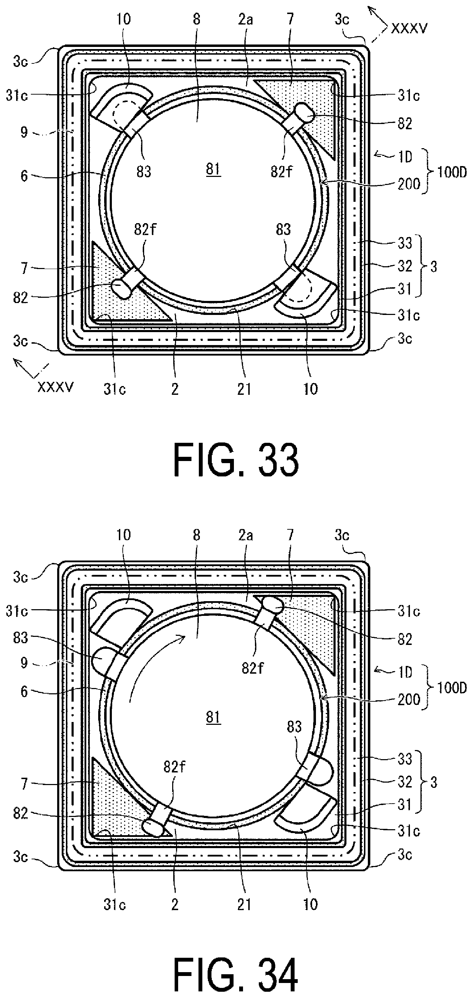

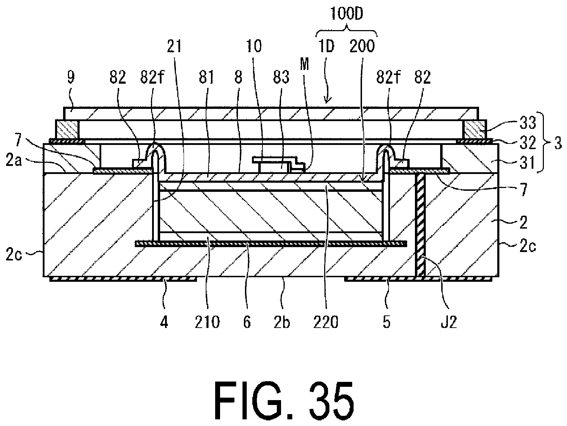

The battery package 1D and the battery module 100D according to a variation of the fifth embodiment will be described with reference to FIGs. 33 to 35. FIG. 33 is a schematic plan view illustrating the battery package 1D and the battery module 100D according to a variation of the fifth embodiment. FIG. 34 is a schematic plan view illustrating a state before the locking piece 83 is inserted into the clasp 10. FIG. 35 is a schematic cross-sectional view taken along line XXXV-XXXV in FIG. 34.

As in the example illustrated in FIGs. 33 to 35, in the battery package 1D according to the variation of the fifth embodiment, each clasp 10 may be open laterally and toward the recessed portion 21 side of the insulation substrate 2.

In the battery package 1D of the variation of the fifth embodiment, by simply rotating the conductive metal plate 8 in one direction (the arrow direction in FIG. 34), each locking piece 83 can be inserted into a corresponding one of the clasps 10 laterally and locked to the clasp 10 easily from below. Thus, according to the variation of the fifth embodiment of the present disclosure, the assemblability (manufacturability) of the battery module 100D can be further improved.

In addition, in the first variation of the second embodiment according to the present disclosure, the same operational effect as that of the second embodiment described above is achieved.

### Other Embodiments

The number of the battery 200 accommodated in the recessed portion 21 of the insulation substrate 2 is not limited to one, and may be two or more.

Battery controlling semiconductor elements for controlling the battery 200 may be accommodated in the recessed portion 21 of the insulation substrate 2. The battery controlling semiconductor elements include a DC/DC converter that supplies a constant power-supply voltage, a reset IC that monitors the power supply, and a switch IC that turns the power supply on and off. For example, electronic components such as a coil and a capacitor may be accommodated in the recessed portion 21 of the insulation substrate 2. Such semiconductor elements and electronic components may be accommodated in another recessed portion different from the recessed portion 21 that accommodates the battery 200, such as a recessed portion open to the second surface 2b of the insulation substrate 2.

The battery module 100 (100A to 100D) may include a drying agent that absorbs moisture. The drying agent may be located on the lower surface of the lid 9. The drying agent may be located between the inner side surface of the recessed portion 21 of the insulation substrate 2 and the side surface of the battery 200. For example, silica gel, calcium chloride, or the like may be used as the drying agent. When the battery module 100 (100A to 100D) includes the drying agent, the deterioration of the battery material of the battery 200 due to chemical changes with moisture can be suppressed.

In one embodiment, (1) a battery package includes an insulation substrate having a first surface, a second surface on an opposite side to the first surface, and a recessed portion open to the first surface and configured to accommodate a battery, a frame portion surrounding the recessed portion on the first surface, a first external electrode located on the second surface, a second external electrode located on the second surface, a first electrode located on a bottom surface of the recessed portion and electrically connected to the first external electrode, a second electrode located on the surface of the insulation substrate between the recessed portion and the frame portion in a plan view of the first surface, and electrically connected to the second external electrode, a receiving portion located at the frame portion or the insulation substrate, a conductive metal plate located on an opening side of the recessed portion and including a connecting portion configured to electrically connect to the second electrode from above, and a locking portion configured to lock to the receiving portion, the conductive metal plate pressing the battery to the bottom surface side by an elastic force, and a lid electrically insulated from the conductive metal plate and configured to close the frame portion.

(2) In the battery package according to (1), the frame portion may include an insulating frame body surrounding the recessed portion on the first surface, and the second electrode may be located inside the insulating frame body.

(3) In the battery package according to (1) or (2), the receiving portion may be provided as a plurality of recessed step portions or an annular recessed step portion located on an inner side surface of the frame portion, and a part of the peripheral portion of the conductive metal plate may be locked to the recessed step portion from below as the locking portion.

(4) In the battery package according to (1) or (2), the receiving portion may be provided as a plurality of recessed step portions or an annular recessed step portion located on an inner side surface of the recessed portion, and a part of a peripheral portion of the conductive metal plate may be locked to the recessed step portion from below as the locking portion.

(5) In the battery package according to (1) or (2), the receiving portion may be provided as a plurality of recessed step portions or an annular recessed step portion located on an inner side surface of the frame portion, and the conductive metal plate may have, on the peripheral portion thereof, a plurality of locking pieces locked to the recessed step portions from below as the locking portion.

(6) In the battery package according to (1) or (2), the receiving portion may be provided as a plurality of recessed step portions or an annular recessed step portion located on an inner side surface of the recessed portion, and the conductive metal plate may have, on the peripheral portion thereof, a plurality of locking pieces locked to the recessed step portions from below as the locking portion.

(7) In the battery package according to any one of (1) to (6), an upper side (above) of the connecting portion may be opened before the lid covers the frame portion.

(8) In any one of (1) to (6), the insulating frame body may have, on an upper surface thereof, a first cutout portion connected to the recessed portion, and the second electrode may overlap the first cutout portion in a plan view.

(9) In the battery package according to any one of (1) to (8), the connecting portion may extend toward a corner portion of the frame portion.

(10) In the battery package according to any one of (1) to (9), the connecting portion may have a curved portion straddling an edge portion of the recessed portion.

(11) In the battery package according to any one of (1) to (10), the front end side of the connecting portion may be bent in an arc shape.

(12) In the battery package according to (5), the frame portion may have a plurality of second cutout portions on an upper side of the recessed step portion, and a part of each locking piece may overlap the second cutout portions in a plan view.

(13) In the battery package according to (5), the frame portion may have a guide portion on an upper side of the recessed step portion, and a cross-sectional shape of the guide portion may be a stepped shape or a tapered shape approaching a center line of the recessed portion in a downward direction.

(14) In the battery package according to (5), the frame portion may have a plurality of insertion ports open upward and to the recessed portion side, and each of the insertion ports may be connected to a corresponding one of the recessed step portions.

(15) In the battery package according to (1) or (2), the receiving portion may be provided as a plurality of clasps located on the first surface, and the conductive metal plate may have, on the peripheral portion thereof, a plurality of locking pieces locked to the clasps from below as the locking portion.

(16) In the battery package according to (15), each of the clasps may be open laterally and to the recessed portion side.

(17) A battery module includes the battery package according to any one of (1) to (16), and a battery accommodated in the recessed portion of the battery package and including a lower surface electrode electrically connected to the first electrode and an upper surface electrode electrically connected to the conductive metal plate.

(18) In the battery module according to (17), the battery may be an all-solid-state battery in which a negative electrode layer, an electrolyte layer, and a positive electrode layer are layered.

(19) In the battery module according to (17), the battery may be a coin battery.

The invention according to the present disclosure has been described above based on the drawings and examples. However, the invention according to the present disclosure is not limited to the above-described embodiments. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, it should be noted that a person skilled in the art can easily make different variations or modifications based on the present disclosure. It should also be noted that these variations or modifications are within the scope of the present disclosure.

### REFERENCE SIGNS

1 Battery package (battery package according to first embodiment)
2 Insulation substrate
2a First surface
2b Second surface
2c Side surface
21 Recessed portion
3 Frame portion
31 Insulating frame body
31d Recessed step portion (receiving portion)
31n First cutout portion
31g Guide portion
32 Frame-shaped metal film
33 Metal frame body
3C Corner portion
4 First external electrode
5 Second external electrode
6 First electrode
J1 First connection wiring
7 Second electrode
J2 Second connection wiring
8 Conductive metal plate
81 Metal plate body
82 Connecting piece (connecting portion)
82f Curved portion
83 Locking piece (locking portion)
9 Lid
100 Battery module (battery module according to first embodiment)
200 Battery
210 Lower surface electrode
220 Upper surface electrode
1A Battery package (battery package according to second embodiment)
31C Inner corner portion
31i Insertion port
100A Battery module (battery module according to second embodiment)
1B Battery package (battery package according to third embodiment)
21d Recessed step portion
22 Second cutout portion
9B Lid
100B Battery module (battery module according to third embodiment)
1C Battery package (battery package according to fourth embodiment)
8C Conductive metal plate
81C Metal plate body
82C Connecting portion
83C Locking portion
100C Battery module (battery module according to fourth embodiment)
1D Battery package (battery package according to fifth embodiment)
10 Clasp (receiving portion)
100D Battery module (battery module according to fifth embodiment)
J1 First connection wiring
J2 Second connection wiring

## Claims

1. A battery package, comprising:
an insulation substrate having a first surface, a second surface opposite to the first surface, and a recessed portion open to the first surface and configured to accommodate a battery;
a frame portion surrounding the recessed portion on the first surface;
a first external electrode located on the second surface;
a second external electrode located on the second surface;
a first electrode located on a bottom surface of the recessed portion and electrically connected to the first external electrode;
a second electrode located on the surface of the insulation substrate between the recessed portion and the frame portion in a plan view of the first surface, and electrically connected to the second external electrode;
a receiving portion located at the frame portion or the insulation substrate; and a conductive metal plate located on an opening side of the recessed portion and comprising a connecting portion configured to electrically connect to the second electrode from above, and a locking portion configured to lock to the receiving portion, the conductive metal plate pressing the battery to the bottom surface side of the recessed portion by an elastic force, and
a lid electrically insulated from the conductive metal plate and configured to close the frame portion.

2. The battery package according to claim 1, wherein
the frame portion comprises an insulating frame body surrounding the recessed portion on the first surface, and
the second electrode is located inside the insulating frame body.

3. The battery package according to claim 1 or 2, wherein
the receiving portion is provided as a plurality of recessed step portions or an annular recessed step portion located on an inner side surface of the frame portion, and
a part of the peripheral portion of the conductive metal plate is locked to the recessed step portion from below as the locking portion.

4. The battery package according to claim 1 or 2, wherein
the receiving portion is provided as a plurality of recessed step portions or an annular recessed step portion located on an inner side surface of the recessed portion, and
a part of the peripheral portion of the conductive metal plate is locked to the recessed step portion from below as the locking portion.

5. The battery package according to claim 1 or 2, wherein
the receiving portion is provided as a plurality of recessed step portions or an annular recessed step portion located on an inner side surface of the frame portion, and
the conductive metal plate has, on the peripheral portion thereof, a plurality of locking pieces locked to the recessed step portion from below as the locking portion.

6. The battery package according to claim 1 or 2, wherein
the receiving portion is provided as a plurality of recessed step portions or an annular recessed step portion located on an inner side surface of the recessed portion, and
the conductive metal plate has, on the peripheral portion thereof, a plurality of locking pieces locked to the recessed step portions from below as the locking portion.

7. The battery package according to any one of claims 1 to 6, wherein
an upper side of the connecting portion is opened before the lid covers the frame portion.

8. The battery package according to any one of claims 1 to 6, wherein
the insulating frame body has, on an upper surface thereof, a first cutout portion connected to the recessed portion, and
the second electrode overlaps the first cutout portion in a plan view.

9. The battery package according to any one of claims 1 to 8, wherein
the connecting portion extends toward a corner portion of the frame portion.

10. The battery package according to any one of claims 1 to 9, wherein
the connecting portion has a curved portion straddling an edge portion of the recessed portion.

11. The battery package according to any one of claims 1 to 10, wherein
the front end side of the connecting portion is bent in an arc shape.

12. The battery package according to claim 5, wherein
the frame portion has a plurality of second cutout portions on an upper side of the recessed step portion, and
a part of each locking piece overlaps the second cutout portions in a plan view.

13. The battery package according to claim 5, wherein
the frame portion has a guide portion on an upper side of the recessed step portion, and
a cross-sectional shape of the guide portion is a stepped shape or a tapered shape approaching a center line of the recessed portion in a downward direction.

14. The battery package according to claim 5, wherein
the frame portion has a plurality of insertion ports open upward and to the recessed portion side, and
each of the insertion ports is connected to a corresponding one of the recessed step portions.

15. The battery package according to claim 1 or 2, wherein
the receiving portion is provided as a plurality of clasps located on the first surface, and
the conductive metal plate has, on the peripheral portion thereof, a plurality of locking pieces locked to the clasps from below as the locking portion.

16. The battery package according to claim 15, wherein
each of the clasps is open laterally and to the recessed portion side.

17. A battery module, comprising:
the battery package according to any one of claims 1 to 16; and
a battery accommodated in the recessed portion of the battery package and comprising a lower surface electrode electrically connected to the first electrode and an upper surface electrode electrically connected to the conductive metal plate.

18. The battery module according to claim 17, wherein
the battery is an all-solid-state battery in which a negative electrode layer, an electrolyte layer, and a positive electrode layer are layered.

19. The battery module according to claim 17, wherein
the battery is a coin battery.
